(19) Europäisches Patentamt
European Patent Office
Office européen des brevets

(11) **EP 3 580 422 B1**

(12) **EUROPÄISCHE PATENTSCHRIFT**

(45) Veröffentlichungstag und Bekanntmachung des Hinweises auf die Patenterteilung:
**20.04.2022 Patentblatt 2022/16**

(21) Anmeldenummer: **18703895.5**

(22) Anmeldetag: **05.01.2018**

(51) Internationale Patentklassifikation (IPC):
***E06B 9/84*** *(2006.01)*

(52) Gemeinsame Patentklassifikation (CPC):
**E06B 9/84;** E06B 2009/807

(86) Internationale Anmeldenummer:
**PCT/EP2018/050283**

(87) Internationale Veröffentlichungsnummer:
**WO 2018/145832 (16.08.2018 Gazette 2018/33)**

(54) **VORRICHTUNG ZUR ERFASSUNG DES ABSTURZES EINES TORBLATTS, SYSTEM ZUR ERFASSUNG DES ABSTURZES EINES TORBLATTS, SOWIE VERFAHREN ZUR ERFASSUNG DES ABSTURZES EINES TORBLATTS**

DEVICE, SYSTEM AND METHOD FOR DETECTING THE FALLING OF A DOOR LEAF

DISPOSITIF DE DÉTECTION DE LA CHUTE D'UN VANTAIL DE PORTE, SYSTÈME DE DÉTECTION DE LA CHUTE D'UN VANTAIL DE PORTE ET PROCÉDÉ DE DÉTECTION DE LA CHUTE D'UN VANTAIL DE PORTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2017 DE 102017102614**

(43) Veröffentlichungstag der Anmeldung:
**18.12.2019 Patentblatt 2019/51**

(73) Patentinhaber: **Efaflex Tor- und Sicherheitssysteme GmbH & Co. KG 84079 Bruckberg (DE)**

(72) Erfinder:
• **VOGEL, Daniela 85419 Mauern (DE)**
• **EICHSTETTER, Karl 84184 Tiefenbach (DE)**

(74) Vertreter: **Kuhnen & Wacker Patent- und Rechtsanwaltsbüro PartG mbB Prinz-Ludwig-Straße 40A 85354 Freising (DE)**

(56) Entgegenhaltungen:
EP-A1- 2 887 535        WO-A1-2007/045422
WO-A2-2016/022534       DE-A1-102010 062 673
DE-A1-102015 000 582    DE-U1-202010 009 055

**Beschreibung**

Die Erfindung betrifft eine Vorrichtung zur Erfassung des Absturzes eines Torblatts, ein System zur Erfassung des Absturzes eines Torblatts, sowie ein Verfahren zur Erfassung des Absturzes eines Torblatts eines Tor, insbesondere eines schnelllaufenden Industrietors.

Schnelllaufende Tore sind in der Praxis vielfach bekannt und seit langem bewährt. Sie dienen als Abschluss für Toröffnungen unterschiedlichster Art im privaten und gewerblichen Bereich. Häufig dienen Industrietore auch der Trennung zwischen dem Innen- und Außenbereich eines Gebäudes. So sind als schnelllaufende Tore insbesondere Roll- und Falttore bekannt.

Das Torblatt beispielsweise eines Rolltors wird im Zuge einer Öffnungsbewegung im Bereich des Torsturzes aufgewickelt oder gegenüber den anderen Wickellagen berührungsfrei in einer Rundspirale oder einer langgestreckten Spirale geführt. Letztere Ausgestaltungsweise wird insbesondere für industrielle Zwecke genutzt, da hiermit hohe Bewegungsgeschwindigkeiten bei großer Lebensdauer und Zuverlässigkeit erzielbar sind.

Derartige schnelllaufende Industrietore haben sich für einen zuverlässigen Abschluss von hochfrequentierten Toröffnungen bewährt. Die Torblätter dieser Industrietore werden mit großen Hüben, vielfach einige Meter, bewegt. Aufgrund der häufig erreichten hohen Betätigungsgeschwindigkeit von mehr als 2 m/s und mehr ist es zumeist möglich, derartige Industrietore zwischen zwei aufeinanderfolgenden Durchfahrten eines Gabelstaplers oder dergleichen zu schließen und so einen Schutz gegen Witterungseinflüsse, Zugluft oder einen Verlust der klimatisierten Atmosphäre in einem Raum herzustellen. Aus DE 20 2010 009 055 U1 ist es als Aufprallschutz bekannt, an einer unteren Kante eines Torblatts eine elastische verformbare Sicherheitsleiste zur Erfassung von Verformungen durch Stoßbelastungen einzusetzen oder Beschleunigungssensoren einzusetzen. In DE 10 2010 062 673 A1 kann ein Beschleunigungssensor einen Bremsvorgang eines Endbereichs eines Torflügels, beispielsweise beim Auftreffen auf ein Hindernis oder beim Verkanten des Endbereichs in einer Führung, erfassen. Aus DE 10 2015 000 582 A1 ist mit dem Ziel die Schließkantengeschwindigkeit eines Tores konstant zu halten bekannt, eine Steuervorrichtung für einen Abschlussantrieb zum Antreiben eines Flügels eines Abschlusses für Öffnungen in Bauwerken, mit einer Schließkantenbewegungserfassungseinrichtung zum Ermitteln einer Momentanschließkantengeschwindigkeit und/oder einer Momentanschließkantenbeschleunigung einer Schließkante des Flügels. Die mit der schnellen Torbewegungen einhergehende erhöhte mechanische Belastung der Antriebskomponenten des Tors führt jedoch zu dem Problem, dass die Ausfallwahrscheinlichkeit der Antriebskomponenten steigt. Im schlimmsten Fall können Zugseile reißen, oder auch Halterungen brechen, was zu einem unerwünschten Absturz des Torblatts führen kann. Aus WO 2007/045422 A1 ist ein schnelllaufendes Industrietor in Form eines Hubtores bekannt. Zur Ausbalancierung des Torblattgewichts des Hubtores ist eine Gewichtsausgleichseinrichtung vorgesehen. Bei vollständig geöffnetem Tor übersteigt das durch die Gewichtsausgleichseinrichtung bereitgestellte Moment wiederum das durch die Gewichtskraft des Torblatts hergestellte Moment an der Antriebswelle, so dass ein Absturz des Torblatts selbst bei einem Defekt des Antriebs zuverlässig verhindert ist. In EP 2 887 535 A1 kann durch Positionssensoren eine permanente Überwachung der Position und/oder Geschwindigkeit des Antriebsmotors bzw. des Torblatts eine gefahrbringende Abwärtsbewegung erkennen und ihr entgegengesteuert werden. Die Sicherheit gegen Absturz wird dadurch erhöht.

Mithin besteht grundsätzlich ein Bedarf, den Absturz eines Torblatts frühzeitig zu erkennen. Aufgrund der vorgesehenen schnellen Beschleunigung von Industrietoren ist es dabei auch schwierig, zwischen einem Absturz und einer gewollten beziehungsweise bewusst herbeigeführten Bewegung des Torblatts zu unterscheiden.

Ein weiteres Problem ist grundsätzlich auch die Energieversorgung von am Torblatt angebrachten Sensoren. Die Stromversorgung für Sensoren am Torblatt erfolgt regelmäßig mittels Spiral- oder Schleppkabel, welche im regulären Betrieb mechanisch altem, insbesondere da die Bewegungsbelastung groß ist. Zudem besteht die Gefahr der mechanischen Beschädigung dieser Kabel, und auch die abstehenden Teile der Kabelhalterungen stellen ein gewisses Verletzungsrisiko für Personen in der Nähe zu dem schnelllaufenden Tor dar.

Als Alternative zu den Schleppkabeln werden auch herkömmlich Energieketten verwendet, welche in das Torblatt eingebaut werden. Damit sind diese Verbindungen für den Betreiber unsichtbar verlegt. Jedoch weisen auch Energieketten das Problem des Verschleißes beziehungsweise der mechanischen Alterung auf.

Zudem ist für den Einsatz von Kabeln und Energieketten ein hoher konstruktiver Aufwand erforderlich. Dies hat seine Ursache in der starken mechanischen Belastung bei Bewegung des Torblatts und unter Umständen in den Einsatzbedingungen des Tors, was mit entsprechenden Kosten verbunden ist. Beispielsweise müssen bei Verwendung des Tors für Kühlhäuser oder Waschstraßen sehr hochwertige Kabel oder Energieketten verwendet werden. Damit verbunden ist ein hoher Platzbedarf, welchen die Biegeradien dieser Kabel und Energieketten erfordern.

Es ist Aufgabe der Erfindung eine Vorrichtung, ein System und ein Verfahren zur Erhöhung der Betriebssicherheit eines Tors vorzusehen, welche zuverlässig und/oder kostengünstig sind.

Diese Aufgaben werden durch die Gegenstände der unabhängigen Ansprüche gelöst. Weitere Aspekte und vorteilhafte Weiterbildungen sind Gegenstand der abhängigen Ansprüche.

Gemäß einem Aspekt der Erfindung ist eine Torblattabsturzdetektionsvorrichtung zum Erfassen des Absturzes eines Torblatts eines Tors, vorzugsweise eines schnelllaufenden Industrietors, vorgesehen, wobei die Torblattabsturzdetektionsvorrichtung am oder im Torblatt vorgesehen ist, aufweisend: ein Mittel zum Erfassen einer Beschleunigung der Torblattabsturzdetektionsvorrichtung in zumindest einer Absturzrichtung der Torblattabsturzdetektionsvorrichtung; eine drahtlose Kommunikationseinheit zum Senden eines Absturzmeldesignals, falls ein Absturz des Torblatts positiv erfasst wird, wobei die positive Erfassung eines Absturzes des Torblatts basierend auf der erfassten Beschleunigung in Absturzrichtung erfolgt.

Ein Absturz des Torblatts im Sinne der Erfindung ist eine ungewollte beziehungsweise nicht beabsichtigte Bewegung des Torblatts. Eine übliche Absturzrichtung ist beispielsweise gravitationsbedingt nach unten gerichtet. Bei Torblättern besteht jedoch auch die Möglichkeit eines "Absturzes nach oben", wenn beispielsweise Gegengewichte das Tor ungewollt nach oben ziehen, weil die Haltekräfte ausfallen. Insofern kann erfindungsgemäß ein Absturz nicht nur nach unten, sondern auch nach oben oder zur Seite hin erfolgen, je nachdem, wie das Tor eingerichtet ist, und welche Kräfte entsprechend auf das Torblatt wirken.

Unter der "Geschwindigkeit" des der Torblatts wird vorliegend die zu der Umgebung des Torblatts (vorzugsweise zu dem Boden) relative Geschwindigkeit (in [m/s]) verstanden.

Der Begriff "Beschleunigung" wird vorliegend allgemein, also auch im Sinne von "bremsen" beziehungsweise "verzögern" gebraucht.

Der "Ruck" ist Ableitung der Beschleunigung nach der Zeit, also die zweite zeitliche Ableitung der Geschwindigkeit, und hat eine physikalische Bedeutung, die weitgehend gleich der umgangssprachlichen Bedeutung ist.

Der Zusammenhang zwischen Ruck r(t), Beschleunigung a(t), Geschwindigkeit v(t) und Position beziehungsweise Lage s(t) des Torblatts kann mathematisch mit folgender Gleichung beschrieben werden:

$$r = \frac{da(t)}{dt} = \frac{d^2 v(t)}{dt^2} = \frac{d^3 s}{dt^3} \qquad \text{(Gleichung 1)}$$

So ist beispielsweise die Beschleunigung die erste Ableitung (d.h., die Änderung) der Geschwindigkeit.

Die Torblattabsturzdetektionsvorrichtung dient der Erfassung des Absturzes des Torblatts. Dazu wird zumindest eine kinetische (physikalische) Größe, vorzugsweise die Beschleunigung, erfasst und ausgewertet. Damit kann vorteilhaft der Absturz des Tors ortsnah durch Bestimmung der mechanischen Parameter des Tors erfasst werden, womit die Sicherheit des Tors erhöht wird.

Nach einer Weiterbildung kann die Torblattabsturzdetektionsvorrichtung weiter einen elektromechanischen Energieumformer mit einer relativ zur Torblattabsturzdetektionsvorrichtung beweglichen Masse aufweisen, wobei die Energieversorgung der Torblattabsturzdetektionsvorrichtung (vorzugsweise ausschließlich) mit elektrischer Energie von dem Energieumformer erfolgt.

Für seinen Einsatzzweck ist die Torblattabsturzdetektionsvorrichtung somit energetisch autark ausgebildet. Damit entfallen beispielsweise die Wartungen einer Batterie, und auch extern angebrachte Vorrichtungen können vermieden werden. Zudem sind keine Verkabelungen zur Stromversorgung der Torblattabsturzdetektionsvorrichtung erforderlich, womit erheblicher mechanischer Aufwand und auch das Risiko von Kabelbrüchen vermieden wird. So müssen im Gegensatz dazu bei einer herkömmlichen Lösung die Kabel zur Energieversorgung der Torblattabsturzdetektionsvorrichtung derart ausgelegt sein, dass diese auch die Laufwege und die Beschleunigungskräfte des Torblatts verkraften. Letztlich erzeugt also die Torblattabsturzdetektionsvorrichtung gemäß dieser Weiterbildung die zum eigenen Betrieb erforderliche Energie selbst.

Es weist die Torblattabsturzdetektionsvorrichtung zumindest einen kinetischen Sensor, beispielsweise einen Beschleunigungssensor, auf. Dessen Messergebnisse werden beispielsweise mit einem Beschleunigungsgrenzwert verglichen, um bei Überschreitung des Beschleunigungsgrenzwerts den Absturz des Tors positiv zu erfassen und ein Absturzmeldesignal zu kommunizieren. Näheres hierzu findet sich weiter unten.

Die Torblattabsturzdetektionsvorrichtung kann entweder in dem Torblatt angeordnet sein, das heiß, in das Torblatt integriert sein, oder es kann diese auf dem Torblatt beispielsweise in einem gesonderten Gehäuse angebracht sein.

In einem beispielhaften Fall ist die drahtlose Kommunikationseinheit eine Sendeeinheit für ein Funksignal mit einer Kennung und einem Dateninhalt (Payload). Weiter ist eine solche beispielhafte Sendeeinheit der Torblattabsturzdetektionsvorrichtung vorzugsweise eine Low-Power-Funkeinheit, welche für einen niedrigen Energieverbrauch optimiert ist. Hierbei kann die Sendeeinheit die betriebsrelevanten Parameter selbstständig senden, wenn ein entsprechendes sendeauslösendes Ereignis vorliegt, d.h., der Absturz des Tors positiv erfasst wurde. Alternativ kann die Sendeeinheit in regelmäßigen Zeitintervallen senden (beispielsweise jede Sekunde), damit eine dazu komplementäre Empfangseinheit die positive Funktion der Torblattabsturzdetektionsvorrichtung feststellen kann, was unter Umständen bei sicherheitskritischen Anwendungen gewünscht ist.

Damit ist es möglich, den Betrieb des Tors zuverlässiger zu gestalten und zu optimieren. Beispielsweise werden die Ausfallzeiten des Tors verringert, die bei Kabelbrüchen der Signalleitungen vorhanden wären.

Der Energieumformer der Torblattabsturzdetektionsvorrichtung ist erfindungsgemäß ein Generator elektrischer Leistung beziehungsweise Energie, wobei mechanische Energieformen aus der Umgebung oder Bewegung des Torblatts in elektrische Energie umgewandelt werden, wodurch im Torblatt selbst elektrischer Strom erzeugt wird. Der erfindungsgemäße Energieumformer wandelt also vorzugsweise die aufgrund der gewollten Bewegung des Torblatts vorhandene mechanische Energie in elektrische Energie und ist damit eine elektromechanische Einrichtung. Hierbei können vorzugsweise mikroelektromechanische Systeme, auch MEMS bezeichnet, zum Einsatz kommen.

Der Energieumformer dieser Weiterbildung nutzt insbesondere die mechanische Energie, die bei jedem Schließ- und Öffnungsvorgang des Torblatts und den damit einhergehenden Beschleunigungsvorgängen entsteht. Das Torblatt kann bei einem Schließ- und Öffnungsvorgang einen Hub von mehreren Metern bei einer Spitzengeschwindigkeit von beispielsweise 3 m/s ausführen. Die Bewegung ist dabei von der Höhe der abzudeckenden Toröffnung sowie dem jeweiligen Öffnungs- und Schließgrad abhängig. Ein Schließ- und Öffnungsvorgang kann die gesamte Toröffnung betreffen, kann aber auch nur teilweise ausgeführt werden und muss das Tor nicht bei jedem Vorgang komplett öffnen oder schließen. In jedem Fall wird das Torblatt aber durch die Antriebseinrichtung stark beschleunigt, das heißt, zunächst beispielsweise auf die Spitzengeschwindigkeit gebracht und dann wieder in den Stand abgebremst.

Der Energieumformer und die Verbraucher in der Torblattabsturzdetektionsvorrichtung sind weiter derart ausgelegt, dass eine zuverlässige Stromversorgung gewährleistet ist. Dazu sind die elektronischen Komponenten in der Torblattabsturzdetektionsvorrichtung vorzugsweise/optional derart ausgelegt, dass diese einen sehr niedrigen Strom-verbrauch (vorzugsweise im $\mu$W Bereich) aufweisen, und ebenso vorzugsweise nur bei Bedarf bestromt werden. Derartige elektronische Komponenten, beispielsweise DC-DC Wandler oder Mikroprozessoren, sind beispielsweise als "ultra low-power" Komponenten erhältlich.

Da der Energieumformer in der Torblattabsturzdetektionsvorrichtung des Torblatts angeordnet ist, bewegt sich der Energieumformer mit dem Torblatt mit und wird entsprechend stark beschleunigt. Je nach Einbauort der Torblattabsturzdetektionsvorrichtung im Torblatt und der Ausgestaltung der Führungen des Tors kann die Bewegung der Torblattabsturzdetektionsvorrichtung im Wesentlichen geradlinig sein und/oder einer Einwickelbewegung des Torblatts folgen.

Durch die Verwendung des Energieumformers ist die Torblattabsturzdetektionsvorrichtung energetisch autark ausgeführt, das heißt, dass keine elektrische Fremdversorgung beziehungsweise Zusatzversorgung der Torblattabsturzdetektionsvorrichtung erforderlich ist, und die durch den Energieumformer erzeugte beziehungsweise aus der Umgebung "eingesammelte" Energie zum Betrieb der Verbraucher der Torblattabsturzdetektionsvorrichtung alleine ausreichend ist.

Weiter werden eine Batterie oder beispielsweise Kabel vermieden, welche kostenintensiv und fehleranfällig sind. Die energetisch autarke Versorgung der Verbraucher der Torblattabsturzdetektionsvorrichtung mittels eines Energieumformers verringert damit die Ausfallwahrscheinlichkeit dieser Einrichtung. Die Nichtverwendung einer Batterie trägt zudem auch allgemeinen Sicherheits- und Umweltaspekten Rechnung, da kein Transport sowie keine Entsorgung und Wartung, unter anderem ein Wechsel, von Batterien mehr erforderlich ist.

Ferner ist keine zusätzliche Vorrichtung zur Energieversorgung der Torblattabsturzdetektionsvorrichtung am Tor, beispielsweise ein induktiver Übertrager, erforderlich. Der konstruktive Aufbau der Torblattabsturzdetektionsvorrichtung ist kompakt und somit in den geringen verfügbaren Platz im Torblatt integrierbar, ohne aufwendige Änderungen am Gesamtaufbau des Torblatts vornehmen zu müssen. Zudem ist eine derartige Vorrichtung wartungsfrei beziehungsweise wartungsarm.

Erfindungsgemäß weist die Torblattabsturzdetektionsvorrichtung also zumindest einen Energieumformer, zumindest ein Mittel zum Erfassen einer Beschleunigung der Torblattabsturzdetektionsvorrichtung und zumindest eine drahtlose Kommunikationseinheit auf. Mit diesen funktionellen Einzelkomponenten kann ein "intelligentes" Torblatt mit einer Einrichtung realisiert werden, welches den Absturz des Torblatts erfassen und an Dritte übermitteln kann, und dabei zudem energetisch autark ist.

Zusammengefasst ist die erfindungsgemäße Torblattabsturzdetektionsvorrichtung zuverlässig und kostengünstig. Insbesondere durch einen Ausfall einer mechanischen Komponente in dem Antriebsstrang des Tors kann es vorkommen, dass das Tor unkontrolliert herabfällt. Ein derartiges Abstürzen stellt für Objekte eine Gefahr dar, durch die Torblattabsturzdetektionsvorrichtung erkannt wird. Wird ein Abstürzen des Torblatts erkannt, können zudem auch weitere Gegenmaßnahmen eingeleitet werden. Beispielsweise kann ein NOT-STOPP Mechanismus ausgelöst werden. Dabei veranlasst die Torsteuereinrichtung etwa, dass die Antriebseinrichtung die Bewegung des Torblatts sofort anhält und die aktuelle Position beibehält. Durch eine derartige Absturzsicherung können Personen- und Objektunfälle verhindert werden.

Gemäß einer Weiterbildung der Erfindung ist eine Torblattabsturzdetektionsvorrichtung vorgesehen, wobei das Mittel zum Erfassen der Beschleunigung der Torblattabsturzdetektionsvorrichtung beispielsweise ein piezoelektrischer Beschleunigungssensor oder ein MEMS-Beschleunigungssensor ist, welcher die Beschleunigung der Torblattabsturzdetektionsvorrichtung in Absturzrichtung misst.

Mit einem derartigen Sensor kann die Beschleunigung des Torblatts recht genau und mit hoher Abtastrate erfolgen. Damit kann auch eine Erfassung des Absturzes des Torblatts schnell und genau erfolgen.

Gemäß einer Weiterbildung der Erfindung ist eine Torblattabsturzdetektionsvorrichtung vorgesehen, wobei das Mittel zum Erfassen der Beschleunigung der Torblattabsturzdetektionsvorrichtung ein Analog/Digital-Wandler ist, welcher die Spannung des Ausgangs des Energieumformers erfasst, wobei die Spannung des Ausgangs des Energieumformers eine Funktion der Beschleunigung der Torblattabsturzdetektionsvorrichtung in Absturzrichtung darstellt.

Vorzugsweise erübrigt sich bei dieser Weiterbildung der Erfindung ein gesonderter Beschleunigungssensor, da der Ausgang des Energieumformers nun einen doppelten Zweck erfüllt. So wird durch den Energieumformer Energie (beziehungsweise elektrische Leistung) zur Verfügung gestellt, und zudem ist der Ausgang beziehungsweise die Ausgangsspannung des elektromechanischen Energieumformers eine Funktion der Beschleunigung einer Masse, die in dem Energieumformer angeordnet ist. Damit lassen sich Rückschlüsse auf die Beschleunigung des Torblatts selbst ziehen.

Beispielsweise kann der Energieumformer experimentell kalibriert werden, und somit der Zusammenhang zwischen Spannung und Beschleunigung herausgefunden und abgespeichert werden. Tastet man die Ausgangsspannung des Energieumformers mit einem A/D Wandler ab, kann man also die Beschleunigung des Torblatts mit Hilfe einer in der Torblattabsturzdetektionsvorrichtung hinterlegten Funktion berechnen.

Gemäß einer Weiterbildung der Erfindung ist eine Torblattabsturzdetektionsvorrichtung vorgesehen, wobei der Absturz des Torblatts positiv beurteilt wird, falls die erfasste Beschleunigung von einem vorbestimmten Beschleunigungsbereich abweicht oder die aus der Beschleunigung (durch Integration) errechnete Geschwindigkeit einen vorbestimmten Geschwindigkeitsgrenzwert überschreitet bzw. von diesem abweicht.

Der Beschleunigungsgrenzwert und der Geschwindigkeitsgrenzwert können dabei derart festgelegt sein, dass damit eine Unterscheidung zwischen dem Normalbetrieb des Torblatts durch die Antriebseinrichtung und einem Absturz vorgenommen werden kann. Wenn beispielsweise die übliche Maximalgeschwindigkeit des Torblatts im Betrieb 1 m/s ist, dann kann ein erfindungsgemäßer Geschwindigkeitsgrenzwert auf 3 m/s festgelegt werden. Geht man von einem fast reibungsfreien Absturz nach unten aus, so würde dieser Grenzwert schon nach weniger als einer halben Sekunde erreicht werden, womit eine schnelle Reaktion der Torblattabsturzdetektionsvorrichtung sichergestellt ist.

Gemäß einer Weiterbildung der Erfindung ist eine Torblattabsturzdetektionsvorrichtung vorgesehen, wobei der Absturz des Torblatts positiv beurteilt wird, falls die erfasste Beschleunigung für eine vorbestimmte erste Zeitdauer in einem unzulässigen Beschleunigungsbereich liegt, wobei die vorbestimmte erste Zeitdauer derart eingerichtet ist, dass diese länger ist, als die Zeitdauer, in der die erfasste Beschleunigung bei einem üblichen Betrieb des Torblatts liegt.

Damit können Torabstürze erfasst werden, welche langsamer als die übliche Kinetik des Torblatts im Betrieb beziehungsweise bei Antrieb durch die Antriebseinrichtung erfolgen. Beschleunigt sich also das Torblatt in unerwarteter Weise langsamer als üblich, kann daraus geschlossen werden, dass das Torblatt antriebslos und ungewollt nach unten "rutscht". Ein solcher rutschender Absturz des Torblatts liegt beispielsweise vor, wenn bei einem Rolltor, das sich in einer fast geöffneten Stellung befindet, das Verhältnis zwischen nach unten ziehender Masse und vorherrschender Rollreibung noch so schlecht ist, dass das Tor nicht plötzlich und schnell abstürzt, sondern dieses zunächst recht langsam nach unten beschleunigt.

Gemäß einer Weiterbildung der Erfindung ist eine Torblattabsturzdetektionsvorrichtung vorgesehen, wobei der Absturz des Torblatts positiv beurteilt wird, falls die erfasste Beschleunigung für eine vorbestimmte zweite Zeitdauer in einem unzulässigen Beschleunigungsbereich liegt, wobei die vorbestimmte zweite Zeitdauer derart eingerichtet ist, dass diese kürzer ist, als die Zeitdauer, in der die erfasste Beschleunigung bei einem üblichen Betrieb des Torblatts liegt.

Hiermit können Torabstürze erfasst werden, welche schneller als die übliche Kinetik des Torblatts im Betrieb beziehungsweise bei Antrieb durch die Antriebseinrichtung erfolgen.

Gemäß einer Weiterbildung der Erfindung ist eine Torblattabsturzdetektionsvorrichtung vorgesehen, wobei der Absturz des Torblatts positiv beurteilt wird, falls die erfasste Ist-Änderung der Beschleunigung um mehr als eine vorbestimmte Toleranz von einer Soll-Änderung der Beschleunigung des Torblatts abweicht.

Die Änderung der Beschleunigung wird auch als "Ruck" bezeichnet. So ist der übliche Ruck der Antriebseinrichtung in einem gewissen Bereich vorbekannt beziehungsweise vorbestimmt (d.h., die Soll-Änderung der Beschleunigung ist vorbekannt). Es kann mit Hilfe eines Vergleichs der ersten Ableitung der gemessenen Beschleunigung (d.h., die Ist-Änderung der Beschleunigung) mit der Soll-Änderung der Beschleunigung ermittelt werden, ob der errechnete Ruck im Soll-Bereich der Änderung der Beschleunigung liegt, oder nicht. Liegt eine Abweichung zwischen Soll- und Ist vor, stürzt das Torblatt ab (oder wird zumindest in unerwünschter Art und Weise bewegt). Ein solcher Vergleich kann beispielsweise mittels zumindest eines Schwellwerts oder auch mittels komplexerer Vergleichsmethoden (beispielsweise mittels eines Mustervergleichs oder mittels Berechnungen über neuronale Netze) erfolgen.

Gemäß einer Weiterbildung der Erfindung ist eine Torblattabsturzdetektionsvorrichtung vorgesehen, wobei das Mittel zum Erfassen der Beschleunigung der Torblattabsturzdetektionsvorrichtung zumindest ein Komparator mit einem voreingestellten Spannungsschwellwert ist, der zumindest einem voreingestellten Beschleunigungsgrenzwert entspricht, wobei der zumindest eine Komparator mit seinem Eingang mit dem Ausgang des Energieumformers verbunden ist; und bei Überschreiten des Spannungsschwellwerts der Absturz des Torblatts positiv beurteilt wird.

Diese Art der Auswertung verringert die Komplexität der Torblattabsturzdetektionsvorrichtung. Dabei wird wiederum davon ausgegangen, dass die Spannung des Ausgangs des Energieumformers eine Funktion der Beschleunigung desselben ist.

Gemäß einer Weiterbildung der Erfindung ist eine Torblattabsturzdetektionsvorrichtung vorgesehen, wobei der Energieumformer derart eingerichtet ist, dass dieser auf dem Induktionsprinzip oder dem piezoelektrischen Prinzip basiert.

Bei der elektromagnetischen Induktion entsteht eine elektrische Spannung bei einer Änderung der magnetischen Flussdichte, wie vorstehend schon näher erläutert wurde. Beispielsweise kann ein bewegter Magnet verwendet werden. Alternativ kann auch der Magnet feststehend ausgebildet sein, während sich der Leiter beziehungsweise die Spule bewegt.

Folglich ist der Energieumformer ein in sich geschlossenes, kompaktes System zur Erzeugung elektrischer Energie. Da der Energieumformer nur von der Bewegung beziehungsweise Beschleunigung des Torblatts und keinen weiteren Umgebungsparametern abhängig ist, kann der Energieumformer unabhängig von weiteren Vorrichtungen im Torblatt verbaut sein. Dabei sind aufgrund der Führung des Torblatts und der Art des Antriebs des Torblatts auch die mechanischen Rahmenbedingungen für den Einsatz eines elektromechanischen Energieumformers genau bekannt, weshalb der Energieumformer hierfür in seinem Aufbau optimiert sein kann.

Weiter werden auch weitere Hilfsvorrichtungen außerhalb des Torblatts, beispielsweise eine externe Induktionsspule, vermieden. Ein solcher Energieumformer nach dem Induktionsprinzip kann kompakt, robust und mit hoher Effizienz realisiert werden. Auch erhöht sich die Zuverlässigkeit der Torblattabsturzdetektionsvorrichtung.

Alternativ kann der Energieumformer nach dem piezoelektrischen Prinzip arbeiten. Ein geeignetes piezoelektrisches Element kann beispielsweise ein üblicher elastischer Biegeschwinger in Form eines länglichen Blättchens sein, welcher an seinem einen Ende (zungenartig) aufgehängt ist, und welcher an seinem anderen freien Ende eine Masse aufweist. Bei Beschleunigung der Masse wird der Biegeschwinger in eine oszillierende Schwingung versetzt.

Auch bei dem piezoelektrischen Element ist die kompakte Bauweise des Energieumformers besonders vorteilhaft, da der Energieumformer unabhängig von anderen Umgebungsparametern als der Torblattbewegung elektrische Energie erzeugt.

Gemäß einer Weiterbildung der Erfindung ist der Energieumformer ein Lineargenerator und ein Freiheitsgrad der Masse des Energieumformers ist eins (f = 1). Dabei ist der Freiheitsgrad der Masse derart vorgesehen, dass dieser mit den wesentlichen (vorzugsweise auf einer Gerade ausgerichteten) Beschleunigungsrichtungen eines Abschlusselements des Torblatts übereinstimmt.

Gemäß einer Weiterbildung der Erfindung ist eine Torblattabsturzdetektionsvorrichtung vorgesehen, wobei der Energieumformer ein Lineargenerator ist, und ein Freiheitsgrad der Masse des Energieumformers f = 1 ist, und der Freiheitsgrad der Masse zumindest einer der Absturzrichtungen entspricht.

Der Energieumformer kann beispielsweise als ein Lineargenerator ausgebildet sein. Eine sich im Energieumformer befindende Masse wird aufgrund ihrer Trägheit bei einem Beschleunigung- und Verzögerungsvorgang des Torblatts geradlinig ausgelenkt. Diese Auslenkung kann beispielsweise mittels des Induktionsprinzips oder des piezoelektrischen Prinzips in elektrische Leistung umgewandelt werden.

So ist beispielsweise bei einem Lineargenerator, welcher nach dem Induktionsprinzip arbeitet, die Masse dabei regelmäßig ein Magnet, vorzugsweise ein Seltenerd-Magnet mit hoher Flussdichte. Die Masse beziehungsweise der Magnet wird sich dabei in einer oder auch mehreren Spulen bewegen. Durch die bei Beschleunigung des Tors verursachte Relativbewegung zwischen Masse und Spule wird mittels des Induktionseffekts eine Spannung erzeugt. Bei einem Lineargenerator ergibt eine einfache Abschätzung der bei Bewegung des Magneten prinzipiell erzeugbaren Spannungen nach dem Induktionsgesetz:

$$U = - d\phi/dt = - N * A * dB/dt, \qquad \text{(Gleichung 2)}$$

wobei ø der magnetische Fluss ist, A die Querschnittsfläche der Spule ist, B die magnetische Induktion ist, N die Zahl der Windungen der Induktionsspule ist, und dø/dt der Flussänderung in der Spule ist. Hierbei sind kurzzeitig induzierte Spannungen von einigen Volt erreichbar.

Die erzeugte Energie kann dann gemäß den folgenden Formeln:

$$E = L * I^2/2, \text{ mit} \qquad \text{(Gleichung 3)}$$

$$L = \mu_0 * N^2 * A/l \qquad\qquad \text{(Gleichung 4)}$$

für eine mit Luft gefüllte Spule errechnet werden, wobei L die Induktivität der Spule in der Einheit Henry, $\mu_0$ die magnetische Feldkonstante ist, A die Fläche der Spule ist, und 1 die Länge des Flusses in der Spule ist. Experimente zeigen, dass mit großzügig dimensionierten Spulen und Magneten kurzzeitige Stromflüsse von einigen 10 oder 100 mA möglich sind. Folglich können beispielsweise pro hub des Tors einige 10 mWs erzeugt werden.

Dadurch, dass das Torblatt seinen Führungen folgen muss und entsprechend eine genau definierte Bewegung ausführen muss, kann der zumindest eine Freiheitsgrad f beziehungsweise die vorgesehenen Bewegungsmöglichkeiten der Masse und/oder des Magneten derart definiert werden, dass dieser mit zumindest einer der wesentlichen Beschleunigungsrichtungen des Torblatts zusammenfällt, damit der Energieumformer wirksam tätig sein kann.

Vorzugsweise ist eine Masse schwingungsfähig an zumindest einer Feder aufgehängt, weist damit einen Freiheitsgrad von f = 1 (einen Translationsfreiheitsgrad) auf, und kann entsprechend entlang einer Gerade hin- und her bewegt werden.

Wenn sich also beispielsweise das Torblatt in seiner Führung geradlinig nach oben oder nach unten bewegt, ist der Energieumformer mit dem Magneten so angeordnet, dass sich der Magnet in dem Torblatt nach oben oder nach unten bewegen kann, wenn das Torblatt geöffnet oder geschlossen wird. Ebenso ist er in dem Fall eines üblichen Tors, welches sich mit einer Bewegung nach oben öffnet, und welches sich mit einer Bewegung nach unten schließt derart angeordnet, dass der Freiheitsgrad mit zumindest einer möglichen Absturzrichtung des Tors übereinstimmt. Damit spricht der Energieumformer besser auf die Kinetik eines Absturzes an.

Dabei kann der Magnet beispielweise in einer Linearführung translationsfähig angeordnet sein.

Alternativ zu der Aufhängung an einer Feder kann der Magnet auch zwischen zwei hydraulischen oder mechanischen Stoßdämpfern angebracht sein, und sich zwischen diesen frei und geradlinig hin- und her bewegen.

Da Industrietore hohe Spitzengeschwindigkeiten erreichen und einem häufigen Schließ- und Öffnungsvorgang und damit Beschleunigungen, welche zu einer Auslenkung einer Masse führen, unterliegen, ergibt sich gerade aus der Wandlung von mechanischer Energie, bei vorliegendem Beispiel kinetischer Energie, in elektrische Energie eine gute Effizienz. Bei jeder Bewegung des Torblatts wird somit für die vorgesehenen Verbraucher elektrische Energie erzeugt, die diese Energie auch regelmäßig bei Bewegung des Tors benötigen. Selbst nach langer Standzeit des Torblatts steht deshalb bei Verwendung des Tors, nämlich durch die anfängliche Beschleunigung des Torblatts, Energie zur Verfügung. Insofern wird die elektrische Energie bedarfsgerecht zur Verfügung gestellt.

Eine Batterie kann diese Anforderung aufgrund ihrer Selbstentladung nicht dauerhaft erfüllen. Der erfindungsgemäße Energieumformer, welcher die mechanische Energie des Torblatts zur Erzeugung elektrischer Energie verwendet, erhöht damit die Zuverlässigkeit des Betriebs.

Gemäß einer Weiterbildung der Erfindung ist eine Torblattabsturzdetektionsvorrichtung vorgesehen, aufweisend: ein zum Speichern der vom Energieumformer erzeugten elektrische Energie; und/oder eine Energiemanagementeinheit zum Verwalten einer vom Energieumformer erzeugten Energie; und/oder einen Gleichrichter zum Gleichrichten der vom Energieumformer erzeugten Ausgangsspannung; und/oder eine Recheneinheit zum Berechnen der Beschleunigungswerte, wobei die Recheneinheit optional eine Signalverarbeitungseinheit aufweist.

Ein Speicherelement im Sinne der Erfindung speichert die vom Energieumformer erzeugte elektrische Energie, so dass diese auch in Phasen zur Verfügung steht, in denen der Energieumformer keine Energie umwandelt. Als Speicherelement können elektrochemische Kondensatoren wie Superkondensatoren, auch als "Goldcaps" bezeichnet, verwendet werden.

Eine erfindungsgemäße Energiemanagementeinheit verwaltet die vom Energieumformer erzeugte Energie derart, dass je nach Bedarf und Ladezustand das Speicherelement mit der erzeugten elektrischen Energie vom Energieumformer geladen wird. Entsprechend kann die Energiemanagementeinheit Verbraucher zu- oder abschalten.

Eine erfindungsgemäße Recheneinheit der Torblattabsturzdetektionsvorrichtung wandelt die sensorisch erfassten physikalischen Größen bei Bedarf um. Beispielsweise kann die Recheneinheit die gemessene Beschleunigung derart integrieren, dass die Geschwindigkeit des Torblatts bekannt ist. Im Hinblick auf einen Beschleunigungssensor kann die Recheneinheit beispielsweise nur den Spitzenwert der Beschleunigung herausfiltern und diesen an die Torsteuereinheit übertragen, um Energie zu sparen.

Gemäß einer Weiterbildung der Erfindung kann die Torblattabsturzdetektionsvorrichtung eine integrierte Baugruppe ausbilden und/oder die Torblattabsturzdetektionsvorrichtung in einem Abschlusselement des Torblatts angeordnet sein.

Durch einen integrierten Aufbau dieser Elemente bildet die Torblattabsturzdetektionsvorrichtung eine kompakte Systembaugruppe. Durch das integrierte Anordnen aus zumindest diesen drei Elementen kann die Torblattabsturzdetektionsvorrichtung energetisch autark fungieren. Hierdurch sind nur geringe Übertragungswege beziehungsweise Leitungslängen im Torblatt notwendig, wodurch die Fehleranfälligkeit der Torblattabsturzdetektionsvorrichtung reduziert werden kann.

Weiter kann die gesamte Torblattabsturzdetektionsvorrichtung zudem in einem Abschlusselement des Torblatts angeordnet sein, also dort, wo beispielsweise auch die Kollisionssensoren angeordnet sind.

Gemäß einer Weiterbildung oder einem Aspekt der Erfindung ist ein System zur Absturzsicherung eines Tors vorgesehen, aufweisend ein Tor, insbesondere schnelllaufendes Industrietor mit einem Torblatt, welches in seitlichen Führungen geführt ist und welches eine Toröffnung abdeckt, und mit einer Antriebseinrichtung zum Bewegen des Torblatts zwischen einer Öffnungs- und Schließstellung; und mit einer Torsteuereinrichtung zum Ansteuern der Antriebseinrichtung, wobei die Torsteuereinrichtung eine weitere Kommunikationseinheit aufweist; und eine Torblattabsturzdetektionsvorrichtung, die vorstehend schon näher beschrieben worden ist.

Ein Tor im Sinne der Erfindung ist eine Vorrichtung mit einem beweglichen Torblatt, welches eine Toröffnung abdeckt.

Ein solches Tor dient beispielsweise als Hallenabschluss oder der thermischen Trennung in Gebäuden (beispielsweise der Trennung zwischen Lager und Kühlbereich).

Ein erfindungsgemäßes Tor ist beispielsweise ein Roll- oder Falttor, bei dem das Torblatt, welches eine Mehrzahl von Einzelelementen umfasst, in seitlich angebrachten Führungen geführt ist. Diese Einzelelemente des Torblatts, auch als Lamellen oder Torzargen bezeichnet, sind beweglich oder abwinkelbar miteinander verbunden.

Das Tor kann insbesondere ein schnelllaufendes Industrietor sein, bei dem das Torblatt mit hohen Spitzengeschwindigkeiten, beispielsweise mit mehr als 1 m/s, vorzugsweise mit mehr als 2 m/s, bewegt wird. Diese Bewegung wird durch eine Antriebseinrichtung des Tors bewirkt, welche beispielsweise einen leistungsfähigen Elektromotor, einen pneumatischen Hubzylinder oder eine Hydraulik aufweist. Weiter kann die Antriebseinrichtung weitere mechanische Komponenten aufweisen, wie zum Beispiel Getriebe, Riemen oder Kopplungsglieder.

Das Tor ist zudem mit einer Torsteuereinrichtung vorgesehen, welche eine halb- oder vollautomatische Steuerung des Tors vornimmt. Eine derartige Torsteuereinrichtung weist einen Mikrocomputer mit Steuerprogrammen (Software) auf, welche den Öffnungs- und Schließbetrieb sowie verschiedene Bedien- und/oder Sicherheitsroutinen vorsehen. Alternativ kann die Torsteuereinrichtung fest verdrahtet ausgeführt sein.

Gemäß einer Weiterbildung der Erfindung ist ein System vorgesehen, wobei ein NOT-STOPP-Mechanismus das Abstürzen des Torblatts innerhalb einer vordefinierten Zeitspanne stoppt, indem eine Motorbremse und/oder mechanische Verriegelungsbolzen von der Torsteuereinrichtung ausgelöst werden. Damit wird der Absturz des Tors nicht nur erfasst, sondern auch möglichst schnell gehemmt.

Nach einer Weiterbildung des Systems kann zur Absturzsicherung, falls das Absturzmeldesignal empfangen wurde, ein NOT-STOPP-Mechanismus das Abstürzen des Torblatts innerhalb einer vordefinierten Zeitspanne stoppen, indem eine Motorbremse und/oder mechanische Verriegelungsbolzen unmittelbar von der Torblattabsturzdetektionsvorrichtung ausgelöst wird/werden, wobei der Energieumformer derart eingerichtet ist, dass dieser auf dem Induktionsprinzip oder dem piezoelektrischen Prinzip basiert.

Dieser NOT-STOPP-Mechanismus kann beispielsweise durch Freischalten (Entriegeln) von mechanisch vorgespannten Bolzen erfolgen. Bei Entriegelung dieser Bolzen wird der Absturz des Tors schnell und effektiv gestoppt. Folglich wird nur die Energie benötigt, welche nötig ist, um die Bolzen-Entriegelung zu aktivieren.

Gemäß einer Weiterbildung der Erfindung ist eine Verwendung einer in einem Torblatt eines Tors angebrachten energieautarken Torblattabsturzdetektionsvorrichtung mit einem elektromechanischen Energieumformer und mit einem Mittel zur Erfassung der Beschleunigung der Torblattabsturzdetektionsvorrichtung zur Absturzsicherung des Torblatts offenbart.

Gemäß einem Aspekt der Erfindung ist ein Verfahren zur Detektion des Absturzes eines Torblatts eines Tors offenbart, mit den folgenden Schritten:

Umwandeln der Beschleunigungsarbeit des Torblatts in elektrische Energie mittels eines elektromechanischen Energieumformers; Erfassen der Beschleunigung des Torblatts; Beurteilen, ob das Torblatt abstürzt oder nicht, basierend auf der erfassten Beschleunigung; Auslösen einer Absturz-Verriegelungsvorrichtung; und Senden eines Absturzmeldesignals mittels einer drahtlosen Kommunikationseinrichtung, falls der Beurteilungsschritt den Absturz des Torblatts positiv beurteilt, wobei die Schritte des Erfassens, des Beurteilens und des Sendens unter beispielsweise der Verwendung der aus der Bewegung des Torblatts erzeugten Energie erfolgen.

Der in der Torblattabsturzdetektionsvorrichtung angeordnete Energieumformer wandelt aus der Umgebung als mechanische Energie frei verfügbare Energie in elektrische Energie. Da der Energieumformer im Torblatt angeordnet ist, stehen ihm hierfür beispielsweise die Bewegung des Torblatts (beziehungsweise die am Torblatt durch die Antriebseinrichtung verrichtete Arbeit) zur Verfügung.

Ein ebenso in der Torblattabsturzdetektionsvorrichtung angeordnetes Speicherelement speichert anschließend die durch den Energieumformer erzeugte elektrische Energie. Das Speicherelement ist vorzugsweise in unmittelbarer Nähe zu dem Energieumformer angeordnet.

Danach wird entweder mittels eines eigenen Beschleunigungssensors oder der Auswertung der Spannungspegel am Ausgang des Energieumformers die Beschleunigung des Torblatts erfasst. In Folge kann auf verschiedene Arten und Weisen eine Beurteilung erfolgen ob das Torblatt abstürzt oder nicht, so wie das vorstehend mittels Beispielen näher beschrieben ist.

Das Verfahren realisiert die gleichen Vorteile, welche vorstehend in Bezug auf das Tor beschrieben worden sind.

Gemäß einer alternativen Weiterbildung der Erfindung können die durch den Beschleunigungssensor gemessenen Werte durch die Torblattabsturzdetektionsvorrichtung an die Torsteuereinrichtung übertragen werden, wobei die Torsteuereinrichtung durch einen Vergleich der Beschleunigungswerte mit zumindest einem voreingestellten Beschleunigungsschwellwert beurteilt, ob das Tor abstürzt oder nicht.

Die vorstehende näher erläuterte erfindungsgemäße Torblattabsturzdetektionsvorrichtung mit ihren verschiedenen Aspekten und Weiterbildungen erlaubt es, in einer zuverlässigen Art und Weise eine Torblattabsturzdetektion durchzuführen.

Das erfindungsgemäße Tor wird nachfolgend in Ausführungsbeispielen anhand der Figuren der Zeichnung näher erläutert: Es zeigt:

Fig. 1 eine Vorderansicht eines erfindungsgemäßen Rolltors 1;

Fig. 2 eine Prinzipdarstellung eines Steuersystems für ein Tor, aufweisend eine Torblattabsturzdetektionsvorrichtung 100, eine Torsteuereinrichtung 5, sowie eine Antriebseinrichtung 4;

Fig. 3 eine schematische Darstellung der Kinetik (Geschwindigkeit, Beschleunigung und Ruck) des Torblatts im Normalbetriebsfall und um Fall des Absturzes des Torblatts, sowie von Erfassungsmöglichkeiten des Absturzes des Torblatts;

Fig. 4 eine Prinzipdarstellung funktionaler Baugruppen der in Fig. 1 dargestellten elektrischen Torblattabsturzdetektionsvorrichtung 100;

Fig. 5 einen Energieumformer 21 gemäß einem Aspekt der Erfindung;

Fig. 6 einen Energieumformer 21 gemäß einem weiteren Aspekt der Erfindung;

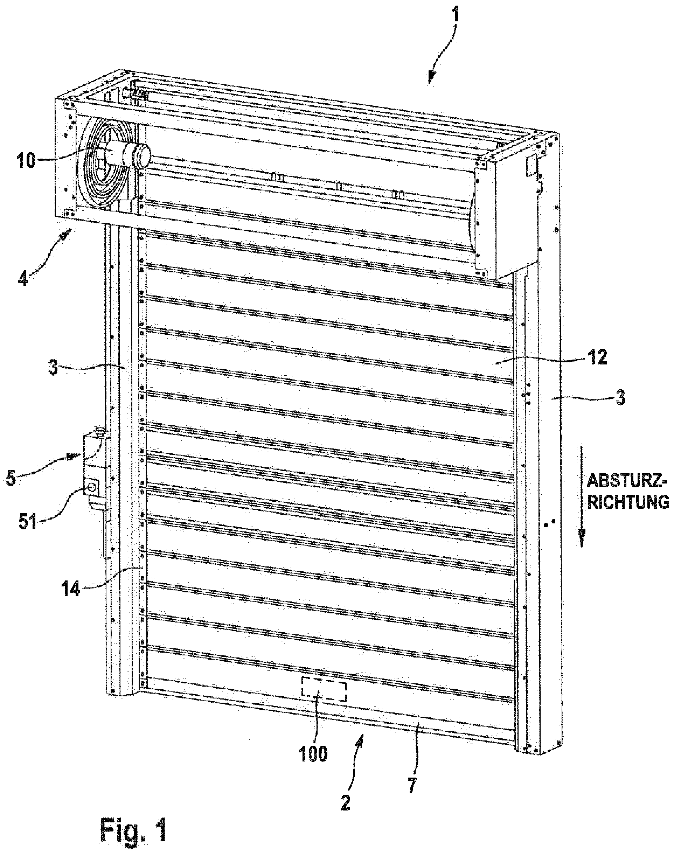

Fig. 1 zeigt eine Vorderansicht eines erfindungsgemäßen Rolltors 1. Gemäß der Darstellung in Fig. 1 weist das Rolltor 1 ein Torblatt 2 auf, welches in seitlichen Führungen 3 gehalten wird und eine Mehrzahl von Lamellen 12 umfasst, welche sich senkrecht zu den Führungen 3 über eine Toröffnung erstrecken.

Das Torblatt 2 kann zudem Scharnierbänder 14 aufweisen, welche eine Mehrzahl von Scharniergliedern umfassen. Jeweils zwei einander zugeordnete Scharnierglieder können dabei durch ein quer zu den seitlichen Führungen 3 verlaufendes Versteifungsprofil derart miteinander verbunden sein, dass die Scharnierbänder 14 mit den Versteifungsprofilen ein stabiles, abwinkelbares Gerüst bilden.

Alternativ zu den Lamellen 12 kann das Torblatt 2 Segmente umfassen, welche, ohne eingerollt zu werden, in einem Schienensystem oberhalb des Tors 1, beispielsweise an einer Decke, geleitet werden können. Weiter kann das Torblatt 2 als Torbehang aus flexiblem PVC (Polyvinylchlorid) mit einer Abschlussleiste ausgebildet sein. Bei Verwendung von Acrylglas kann das Torblatt 2 auch durchsichtig ausgestaltet sein. Da das Tor 1 als Innen- oder Außentor ausgebildet sein kann, kann das Torblatt 2 auch Fenster oder Türen umfassen.

Ferner weist das Torblatt 2 ein Abschlusselement 7 auf, welches bodenseitig mit einer Gummidichtung oder dergleichen versehen ist. Das Abschlusselement 7 sowie die Scharnierglieder sind dabei koaxial zu Schwenkachsen der Scharnierglieder verschwenkbar. In dem Abschlusselement 7 befindet sich eine Torblattabsturzdetektionsvorrichtung 100.

Das Torblatt 2 wird über einen Motor 10 der in Fig. 1 dargestellten Antriebseinrichtung 4, der die Motorleistung mittels einer Antriebswelle in an sich bekannter Weise überträgt, angetrieben. Die Motorleistung ist dabei derart dimensioniert, das sich das Rolltor 1 schnell (> 1 m/s, vorzugsweise > 2 m/s) öffnen und schließen kann.

Befindet sich das Rolltor 1 in dem geschlossenen Zustand, so ist das Abschlusselement 7 mit einem bodenseitigen Element des Rolltors 1 in Kontakt. In diesem Zustand ist die thermisch trennende Wirkung beziehungsweise die Dichtheit des Rolltors 1 am größten, so dass ein Luftaustausch zwischen der ersten und der zweiten Seite des Rolltors 1 weitgehend oder vollständig unterbunden wird. Im vollständig geöffneten Zustand ist die von dem Rolltor 1 freigegebene Fläche der Toröffnung maximal. Das Rolltor 1 kann aber auch, entsprechend der Programmierung der Torsteuereinrichtung 5, jeden anderen Zustand zwischen dem geschlossenen und geöffneten Zustand annehmen.

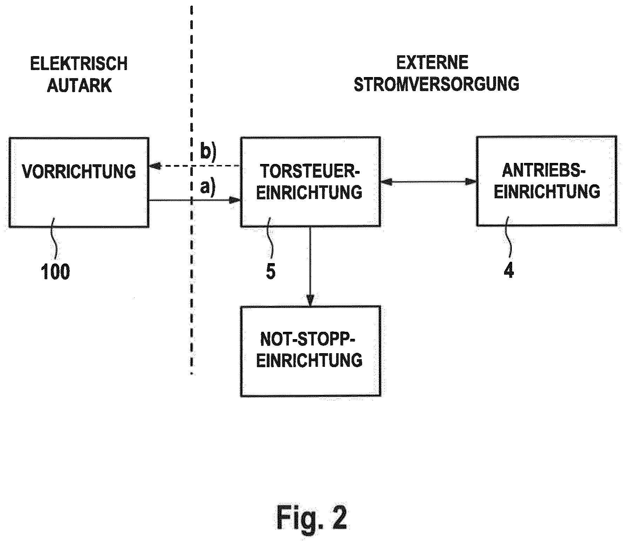

Fig. 2 zeigt eine Prinzipdarstellung eines Systems aus der elektrischen Torblattabsturzdetektionsvorrichtung 100, der Torsteuereinrichtung 5 sowie der Antriebseinrichtung 4. Die Torblattabsturzdetektionsvorrichtung 100 ist dabei wie in Fig. 1 gezeigt in oder an dem Torblatt 2 angeordnet. Die Torsteuereinrichtung 5 ist weiter mit zumindest einer NOT-STOPP-Einrichtung verbunden. Die NOT-STOPP-Einrichtung dient dem Stoppen des Torblatts 2 im Falle eines (erfassten) Absturzes des Torblatts 2. Beispielsweise können Sperrvorrichtungen in oder bei den Führungen des Torblatts 2 angeordnet sein, und bei Aktivierung durch die Torsteuereinrichtung 5 im Absturzfall eine Bewegung des Torblatts 2 unterbinden beziehungsweise stoppen. Im Detail könnten hierfür beispielsweise Sperrbolzen oder Bremsbacken zu Einsatz kommen. Alternativ kann die NOT-STOPP-Einrichtung auch in die Antriebseinrichtung 4 des Torblatts 2 eingreifen und beispielsweise die Drehung der Motorachse in geeigneter Weise unterbinden.

Die Antriebseinrichtung 4 sowie die Torsteuereinrichtung 5 können ortsfest und benachbart zu dem Torblatt 2 angeordnet sein. Die Kommunikation zwischen der Torblattabsturzdetektionsvorrichtung 100, der Torsteuereinrichtung 5 sowie der Antriebseinrichtung 4 kann über Funk bi- oder unidirektional erfolgen. Ist die Kommunikation zwischen Torblattabsturzdetektionsvorrichtung 100 und Torsteuereinrichtung 5 unidirektional, dargestellt durch Pfeil a) in Fig.2, so ist die Torblattabsturzdetektionsvorrichtung 100 mit einer Sendeeinheit und die Torsteuereinrichtung 5 mit einer Empfangseinheit ausgebildet. Erfolgt die Kommunikation zwischen Torblattabsturzdetektionsvorrichtung 100 und Torsteuereinrichtung 5 bidirektional, dargestellt durch die Pfeile a) und b), so sind sowohl die Torblattabsturzdetektionsvorrichtung 100 als auch die Torsteuereinrichtung 5 als Sende- und Empfangseinheit ausgebildet. Dabei werden mit Hilfe der optionalen Sensoreinheit 25 erfasste Parameter über die Kommunikationseinheit 200 der Torblattabsturzdetektionsvorrichtung 100 zu der Sende- und Empfangseinheit der Torsteuereinrichtung übertragen.

Die Signalübertragung zwischen der ersten und zweiten Sende- und Empfangseinheit 200, ein Beispiel einer drahtlosen Kommunikationseinheit 200, kann über eine bidirektionale Funkstrecke erfolgen. Beispielsweise kann die Übertragung mit Bluetooth erfolgen. Nach Identifizierung der ersten beziehungsweise zweiten Sende- und Empfangseinheit 200 über die jeweilige 48-Bit Adresse erfolgt die Datenübertragung über Datenpakete. Als Schnittstelle zu den Mikrocontrollereinheiten kann beispielsweise die serielle Schnittstelle RS-232 verwendet werden.

Vorzugsweise kann die Signalübertragung über eine unidirektionale Funkstrecke erfolgen. So ist an der Torsteuereinrichtung 5 nur eine Empfangseinheit vorgesehen, während an der Torblattabsturzdetektionsvorrichtung nur eine Sendeeinheit vorgesehen ist. So kann eine unidirektionale Datenübertragung für bestimmte Anwendungen ausreichend sein. Zudem ist diese Art der Datenübertragung im Vergleich zur bidirektionalen Datenübertragung energiesparend, da seitens der Torblattabsturzdetektionsvorrichtung 100 keine Energie für die Bereitschaft zum Empfang beziehungsweise für einen Empfang von Daten verbraucht wird.

So ist generell für ein Absturzmeldesignal, welches beispielsweise nur aus einem einzelnen Funksignal mit Identifizierungscode und Datenfeld (in dem der Absturz des Torblatts positiv vermerkt ist), nur eine unidirektionale Übertragung erforderlich. Um Sicherzustellen, dass das Absturzmeldesignal auch wirklich empfangen wird, kann dieses beispielsweise auch mehrfach (z.B. zweimal) widerholt werden.

Mit der Torsteuereinrichtung 5 können mehrere Einrichtungen verbunden sein, wie beispielsweise ein Öffnungsschalter 51, eine Fernbedienung, oder weitere Sensoren, die den Toröffnungsbereich erfassen. Die Torsteuereinrichtung 5 berücksichtigt die Informationen beziehungsweise betriebsrelevante Parameter, welche von diesen weiteren Einrichtungen empfangen werden, und steuert die Antriebseinrichtung 4 derart an, dass diese das Rolltor 1 entsprechend dem gewünschten Betriebsmodus öffnet oder schließt.

So erhält die Torsteuereinrichtung 5 von diesen Sensoren weitere betriebsrelevante Parameter von der Torblattabsturzdetektionsvorrichtung 100. Diese betriebsrelevanten Parameter werden von der Torsteuereinrichtung 5 ebenso bei der Ansteuerung der Antriebseinrichtung 4 berücksichtigt.

Die Verbindung zwischen Torsteuereinrichtung 5 und Antriebseinrichtung 4 kann sowohl über Kabel als auch kabellos, beispielsweise wie oben dargestellt über Funk, erfolgen. Die Antriebseinrichtung 4 treibt abhängig von den empfangenen Befehlen das Torblatt 2 an.

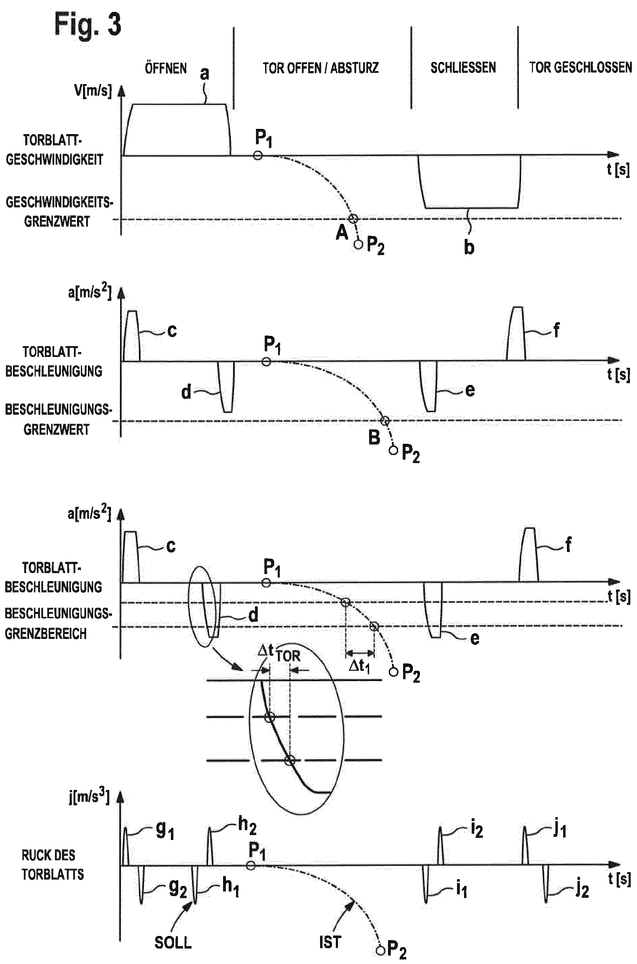

Fig. 3 zeigt eine schematische Darstellung der Kinetik (d.h., die Geschwindigkeit, Beschleunigung und/oder Ruck) des Torblatts im Normalbetriebsfall und im Fall des Absturzes des Torblatts, sowie von Erkennungsmöglichkeiten des Absturzes des Torblatts.

Auf der linken Seite der Fig. 3 sind beispielhaft (beginnend von oben her) die Geschwindigkeit, die Beschleunigung (zweifach), und der Ruck des Torblatts in Abhängigkeit zur Zeit in Sekunden für ein Tor der Fig. 1 angegeben. Dabei stimmen die Zeitskalen aller vier Diagramme der Fig. 3 (horizontal) überein, d.h., alle vier Diagramme geben im zeitlichen Verlauf die gleichen Vorgänge wieder. Beispielsweise ist passend zum Geschwindigkeitsverlauf vertikal darunter die zugehörige Beschleunigung angegeben.

Unter der Überschrift "Öffnen" ist der Verlauf eines Öffnungsvorgangs eines Torblatts jeweils für die vorstehend aufgeführten Größen angegeben und unter der Überschrift "Schließen" ist der Verlauf eines Schließvorgangs eines Torblatts jeweils für die vorstehend aufgeführten Größen angegeben.

Beispielsweise wird bei dem Beispiel des Kurvenverlaufs a der Fig. 3 (angegeben durch die durchgezogene Linie) das Torblatt auf eine vorbestimmte Geschwindigkeit beschleunigt, eine Zeitlang mit dieser Geschwindigkeit bewegt, und dann wieder auf die Geschwindigkeit Null in den Stillstand abgebremst. Entsprechendes ist bei dem Kurvenverlauf b (angegeben durch die durchgezogene Linie) beim Schließen des Tors der Fall.

Ebenso entsprechend geben die Kurvenverläufe c, d, e und f die Beschleunigung an, die bei dem Öffnungs- und dem Schließvorgang auf das Torblatt stattfindet. Passend hierzu ist unten in der Fig. 3 der Ruck mit den Kurvenverläufen gl, g2, hl, h2, i1, i2, j1 und j2 angegeben.

Zwischen dem Öffnungs- und dem Schließvorgang ist das Tor vorliegend weitgehend oder vollständig offen, d.h., das Torblatt 2 befindet sich oben. Nach dem Schließvorgang ist das Tor geschlossen, d.h., das Torblatt 2 befindet sich unten.

Die punkt-gestrichelte Linie gibt weiter den ungeplanten Fall eines Torblattabsturzes an. Bei dem Punkt P1 reißt beispielsweise das Zug- beziehungsweise Halteseil des Torblatts 2 eines geöffneten Tors 1. In Folge wird das Torblatt 2 durch die Gravitationskraft nach unten beschleunigt und würde bei dem Punkt P2 auf dem Boden aufschlagen. Durch den Vergleich der errechneten Absolutgeschwindigkeit des Torblatts einen vorbestimmten Geschwindigkeitsgrenzwert oder durch einen Vergleich der gemessenen Beschleunigung mit einem vorbestimmten Beschleunigungsgrenzwert kann nun der Absturz des Torblatts vor dem Aufschlag auf dem Boden erfasst werden und beispielsweise ein NOT-STOPP des Torblatts eingeleitet werden. Im Fall eines Vergleichs der Geschwindigkeiten ist eine positive Erfassung des Absturzes mit dem Punkt A angegeben. Im Fall eines Vergleichs der Beschleunigungen ist eine positive Erfassung des Absturzes mit dem Punkt B angegeben.

Zusätzlich oder alternativ kann der Absturz des Torblatts 2 positiv beurteilt werden, falls die erfasste Beschleunigung für eine vorbestimmte erste Zeitdauer in einem unzulässigen Beschleunigungsbereich liegt, wobei die vorbestimmte erste Zeitdauer $\Delta t1$ derart eingerichtet ist, dass diese (evtl. auch um mehr als eine Toleranz) länger ist, als die Zeitdauer $\Delta t$-Tor, in der die erfasste Beschleunigung bei einem üblichen Betrieb des Torblatts (2) liegt. Dieser Fall eines Torblatts 2, welches "langsam" (d.h., relativ zur üblichen Bewegung durch die Antriebseinrichtung langsamer) abstürzt beziehungsweise abrutscht, ist im Detail in dem (von oben gezählt) dritten Diagramm der Fig. 3 dargestellt.

Gemessen wird hier die Zeitdauer $\Delta t1$, in der sich die Beschleunigung des Torblatts 2 in einem vorab definierten Beschleunigungsbereich befindet, d.h., beispielsweise die Zeitdauer von Eintritt bis Austritt in den vorab definierten Beschleunigungsbereich. Diese ermittelte Zeitdauer $\Delta t1$ wird mit einer Zeitdauer $\Delta t$-Tor verglichen, die entweder vorab einmalig herstellerseitig kalibriert wurde, oder die bei einem vorangegangenen regulären Schließvorgang erfasst und in der Torblattabsturzdetektionsvorrichtung abgespeichert wurde. Letzteres hat den Vorteil, dass dem Verschleiß des Tors über die Betriebsdauer Rechnung getragen wird.

Bezugnehmend auf das (von oben gezählt) vierte Diagramm der Fig. 3 ist dort der Ruck des Torblatts 2 im üblichen Betrieb (vgl. beispielsweise der Kurvenverlauf hl, der "Soll" Kurvenverlauf) und ebenso zum Vergleich der Ruck im Falle des Absturzes (vgl. die strich-gepunktete Linie zwischen P1 und P2, der "Ist" Kurvenverlauf im Absturzfall) angegeben. So wird sich der Ruck bei Soll-Betrieb klar von dem Ruck bei einem Absturz unterschieden, was mittels geeigneter mathematischer Methoden (beispielsweise mittels zumindest einem Schwellwert oder durch Vergleich des Kurvenverlaufs) ausgewertet werden kann.

Zusammengefasst gibt es eine Mehrzahl von möglichen Auswertungsmöglichkeiten, um einen Absturz des Torblatts zu erfassen, welche vorstehend näher beschrieben wurden.

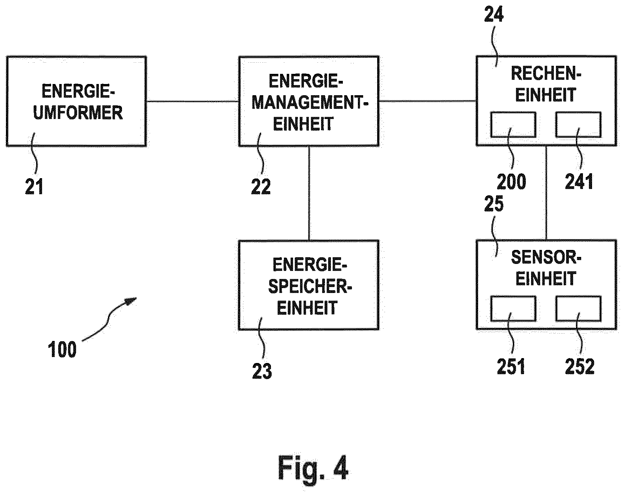

Fig. 4 zeigt eine Prinzipdarstellung der funktionalen Baugruppen der in Fig. 1 und Fig. 2 dargestellten elektromechanischen Torblattabsturzdetektionsvorrichtung 100. Die Torblattabsturzdetektionsvorrichtung 100 weist einen Energieumformer 21, eine Energiemanagementeinheit 22, eine Energiespeichereinheit 23, eine Recheneinheit 24, eine optionale Sensoreinheit 25 sowie optional zumindest eine Aktoreinheit 26 auf.

Der erfindungsgemäße Energieumformer 21 kann beispielsweise die mechanische Energie des Torblatts 2 in elektrische Energie umwandeln, um damit die elektrischen Verbraucher in der Torblattabsturzdetektionsvorrichtung 100 zu versorgen. Mögliche Ausgestaltungen des Energieumformers 21 werden nachstehend im Detail beschrieben.

Bei einem Öffnung- und/oder Schließvorgang kann der Energieumformer 21 ausreichend Leistung für einen Betrieb der Verbraucher erzeugen. Beispielsweise ist es so möglich einige 10 mW Leistung zu erzeugen, was für den Betrieb von entsprechenden Low-Power-Komponenten ausreichend ist. Über die Energiemanagementeinheit 22 geregelt, kann die vom Energieumformer 21 erzeugte Leistung zum Laden der Energiespeichereinheit 23 und/oder zum Versorgen der Verbraucher der Torblattabsturzdetektionsvorrichtung 100 verwendet werden.

Die erfindungsgemäße Energiemanagementeinheit 22 fungiert als Schnittstelle zwischen Energieumformer 21, Energiespeichereinheit 23 und den weiteren in der Torblattabsturzdetektionsvorrichtung 100 enthaltenen elektrischen Verbrauchen. Zudem wandelt die Energiemanagementeinheit 22, üblicherweise mittels einer einfachen elektronischen Schaltung, die vom Energieumformer 21 erzeugte Energie (Spannung, Strom) derart um, dass diese in der Energiespeichereinheit 23 längerfristig gespeichert werden kann. Beispielsweise wird mittels eines Brückengleichrichters die vom Energieumformer 21 erzeugte Wechselspannung in eine Gleichspannung umgewandelt. Dabei ist die Energiemanagementeinheit 22 derart ausgelegt, dass diese selbst einen hohen Wirkungsgrad aufweist und wenig Energie verbraucht.

Die Energiespeichereinheit 23 ist vorzugsweise ein Kondensator mit einer großen Kapazität, beispielsweise ein "Goldcap" mit zumindest mehreren mF, welcher der Zwischenspeicherung der vom Energieumformer 21 erzeugten elektrischen Energie dient. Die Energiespeichereinheit 23 ist mit der Energiemanagementeinheit 22 verbunden. So soll die Energiespeichereinheit 23 den Verbrauchern der erfindungsgemäßen Torblattabsturzdetektionsvorrichtung 100 Energie zu Zeiten verfügbar machen, bei denen der Energieumformer 21 keine oder zu wenig Energie erzeugt. Die Energiespeichereinheit 23 weist vorzugsweise eine geringe Selbstentladerate auf, damit die gespeicherte Energie auch über längere Zeiträume zur Verfügung steht und der Wirkungsgrad der Torblattabsturzdetektionsvorrichtung 100 groß ist.

Die elektrischen Verbraucher der erfindungsgemäßen Torblattabsturzdetektionsvorrichtung 100 umfassen zumindest eine Recheneinheit 24 sowie optional die zumindest eine Sensoreinheit 25. Die Recheneinheit 24 weist die drahtlose Kommunikationseinheit 200, sowie die Signalverarbeitungseinheit 242 auf. Die Signalverarbeitungseinheit 242 kann über einen Mikrokontroller, etwa einen herkömmlichen 8-Bit-Mikrokontroller, oder alternativ über eine DSP (Digitaler-Signal-Prozessor) umgesetzt werden. Diese Signalverarbeitungseinheit 242 ist vorzugsweise in "ultra-low-power" Technologie ausgeführt.

Die Sensoreinheit 25 weist optional zumindest einen Sensor 251 zum Erfassen der Kinetik der Torblattabsturzdetektionsvorrichtung 100 (d.h., zumindest einer der folgenden Parameter: Geschwindigkeit, Beschleunigung, Ruck) sowie wiederum optional eine Signalkonditionierungseinheit 252 auf. Die Signalkonditionierungseinheit 252 kann das von dem Sensor 251 ausgegebene elektrische Signal (beispielsweise digitale Beschleunigungsdaten) verarbeiten, etwa filtern, verstärken oder in absolute Messwerte (beispielsweise in G) umrechnen. Im Fall mehrerer erfasster physikalischer kinetischer Parameter kann die Signalkonditionierungseinheit 252 die elektrischen Signale auch multiplexen.

Die Recheneinheit 24 dient bei einem Anwendungsfall der Umsetzung der in Figur 3 beschriebenen Vorgänge. Beispielsweise kann die Recheneinheit die Daten eines Beschleunigungssensors 251 durch Integration in einen Geschwindigkeitswert betreffend das Torblatt 2 umrechnen. Dann kann die Recheneinheit diesen numerischen Geschwindigkeitswert mit einem vorbestimmten Geschwindigkeitsgrenzwert vergleichen. Wird der vorbestimmte Geschwindigkeitsgrenzwert überschritten (oder von diesem abgewichen), löst die Recheneinheit ein Absturzmeldesignal aus, welches dann von der drahtlosen Kommunikationseinheit 200 unmittelbar nach Überschreiten des Geschwindigkeitsgrenzwerts an die Torsteuereinrichtung 5 übertragen wird. Diese kann dann auf den Absturz des Tors geeignet reagieren.

Die Aktoreinheit dient bei einem Anwendungsfall der notfallgemäßen Abbremsung beziehungsweise dem NOT-STOPP des Torblatts. Dies kann per durch Federn mechanisch vorgespannte Bolzen realisiert sein, welche im Notfall durch Entriegeln in die Zargen eingreifen und dort zur Verrastung und somit zum sofortigen Stopp des frei fallenden Torblatts fuhren. Diese Bolzen werden vorzugsweise beidseitig am Torblatt benachbart zu den Torblattführungen montiert.

Bei einem anderen Anwendungsfall dient die Recheneinheit 24 nur der Aufbereitung der Messwerte des Sensors 251 und der anschließenden Übertragung der Messwerte zu der Torsteuereinrichtung. In diesem Fall kann dann die Torsteuereinrichtung 5 die in Zusammenhang mit Fig. 3 beschriebenen Vorgänge ausführen, um einen Absturz des Tors zu erkennen und geeignet zu reagieren.

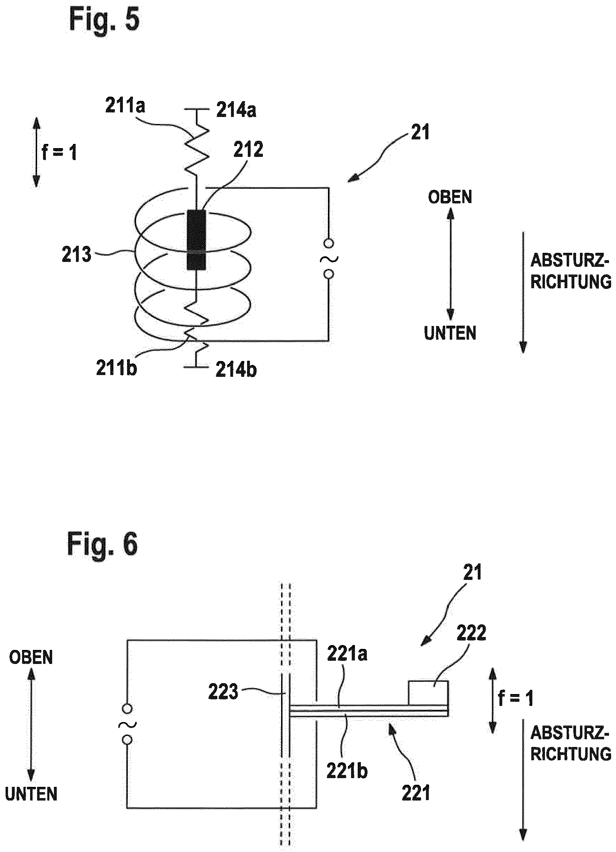

Fig. 5 und Fig. 6 zeigen je eine Ausführungsform eines Energieumformers 21, der die mechanische Energie des Torblatts 20 in elektrische Energie wandelt.

Der in Fig. 5 dargestellte Energieumformer 21 arbeitet mit Hilfe des Induktionsprinzips. Dazu sind in einem Hohlraum in dem Energieumformer 21 zwei gegenüberliegende Federn 211a und 211b angeordnet, welche beide entlang ihrer Mittelachsen, welche in der gleichen Richtung verlaufen, ausgelenkt werden können. Die Federn 211a und 211b sind durch Befestigungen 214a und 214b fest mit dem Abschlusselement 7 verbunden.

An den freien bewegbaren Enden der Federn 211a und 211b ist ein Magnet 212 befestigt. Damit kann sich der Magnet 212, welcher entlang der Mittelachsen der Federn 211a und 211b beweglich aufgehängt ist, sowohl in Richtung der einen Feder 211a als auch in Richtung der anderen Feder 211b bewegen. Der Freiheitsgrad f des Magneten 212 ist f = 1. Dies kann beispielsweise durch eine nicht näher dargestellte Linearführung des Magneten 212 oder durch eine zweiseitige Aufhängung des Magneten 212 erreicht werden. Die Federkonstanten der Federn 211a und 211b sind im Verhältnis zur Masse des Magneten 212 derart ausgelegt, dass diese eine oszillierende (gedämpfte) Schwingung des Magneten 212 erlauben. Wird nun der Energieumformer 21 in einer Richtung beschleunigt, in die der Magnet 212 auslenkbar ist, wird dem oszillierenden System aus Federn 211a, 211b und Magnet 212 mechanische Energie zugeführt. Dabei wird das oszillierende System insbesondere auch dann weiterschwingen, wenn die Beschleunigung des Energieumformers 21 geendet hat. Um eine größtmögliche Schwingung des oszillierenden Systems zu erzielen, fallen die Richtungen der Beschleunigungskräfte, welche auf den Energieumformer 21 wirken können, mit den Richtungen zusammen, in denen der Magnet 212 auslenkbar ist.

Die erfindungsgemäße Aufhängung des Magneten 212 erlaubt eine lineare Auslenkung desselben. Übereinstimmend ist auch die Bewegung des Abschlusselements 7 über große Bereiche eine lineare Bewegung. Entsprechend ist der Energieumformer 21 derart in dem Abschlusselement 7 angeordnet, dass der Bewegungsfreiheitsgrad (Translationsfreiheitsgrad f = 1) des Magneten 212 mit der Öffnungs- und Schließrichtung übereinstimmt. Damit wird der Wirkungsgrad des Energieumformers 21 optimiert. In Fig. 5 dargestellt ist ein Energieumformer, dessen Freiheitsgrad mit einem Torblatt zusammenfällt, welches sich nach unten schließt, und nach oben öffnet.

Zudem ist eine Spule 213 in dem Energieumformer 21 derart angeordnet, dass sich der Magnet 212 entlang derer Mittelachse bewegt. So bewegt sich der Magnet 212 zumindest teilweise in der Spule 213 hin und her. Bei einer oszillierenden Schwingung des Magneten 212 wird mittels Induktion elektrische Energie erzeugt, welche am Ausgang des Energieumformers 21 in Form einer Wechselspannung zur Verfügung gestellt wird. Ein besonderer Vorteil des erfindungsgemäßen linearen Energieumformers 21 ist, dass dieser derart an die deterministisch vorhersehbare Bewegung und die damit einhergehenden Beschleunigungskräfte des Torblatts 2 angepasst ist, dass der Wirkungsgrad maximal wird. Besonders vorteilhaft ist es, wenn der Energieumformer 21 in dem Abschlusselement 7 angeordnet ist, da die Bewegung des Abschlusselements 7, im Vergleich zu anderen Elementen des Torblatts 7, hauptsächlich entlang einer Geraden verläuft. Damit sind die durch die Bewegung des Torblatts 2 auf den Magneten 212 wirkenden Trägheitskräfte parallel zu den durch die Federn 211a und 211b auf den Magneten 212 wirkenden Kräfte. Durch diese Ausrichtung der an dem Magneten 212 angreifenden Kräfte wird die Energieübertragung auf die Federn 211a und 211b optimiert. Damit kann schließlich eine effiziente Energieumwandlung erreicht werden.

Zudem kann der Freiheitsgrad des Energieumformers 21 auch mit der Absturzrichtung des Torblatts 2 zusammenfallen, wie in Fig. 5 dargestellt. Denn dann wird der Energieumformer 21 besonders empfindlich auf die Kinetik des Absturzes des Torblatts 2 reagieren. So kann beispielsweise der Ruck (beziehungsweise die damit einhergehende Beschleunigung), welcher bei einem Absturz des Torblatts 2 vorliegt (im Vergleich zu einer geringeren Beschleunigung bei Betrieb durch die Antriebseinrichtung 4) zu einer besonders großen Auslenkung des Magneten 212 führen, was wiederum zu einer besonders hohen Spannung am Ausgang des Energieumformers 21 führt. Diese abnormal hohe Spannung kann nun mittels eines geeignet festgelegten Spannungsschwellwertes und einem Komparator erfasst werden, womit am Ausgang des Komparators ein digitales Signal anliegt, das den Absturz des Torblatts 2 anzeigt. Die Recheneinheit 24 kann nun in geeigneter Weise auf dieses Signal reagieren, beispielsweise über die drahtlose Kommunikationseinheit 200 ein Absturzmeldesignal ausgeben. Damit kann die Sensoreinheit 24 entfallen, und der Energiegenerator 24 dient zusammen mit dem Komparator der Erfassung des Absturzes, womit in vorteilhafter Art und Weise eine kostengünstige und energieautarke Torblattabsturzdetektionsvorrichtung 100 realisiert werden kann.

Der in Fig. 5 dargestellte alternative Energieumformer 21 arbeitet nach dem piezoelektrischen Prinzip. In dem Abschlusselement 7 ist ein Befestigungselement 223 angeordnet. An diesem Befestigungselement 223 ist ein Biegeschwinger 221, die beiden Biegeschwingerelemente 221a und 221b umfassend, mit seinem einem Ende angebracht. Der Biegeschwinger 221 ist vorzugsweise ein piezoelektrisches Element, welches aus dem Stand der Technik bekannt ist. An dem anderen, freien Ende des Biegeschwingers 221 ist eine Masse 222 angebracht. Der Biegeschwinger 221 sowie die Masse 222 sind senkrecht zur Bewegungsrichtung des Torblatts 21 derart angeordnet, dass der Biegeschwinger 221 bei Beschleunigung des Torblatts 2 möglichst effektiv ausgelenkt wird.

Wird das Torblatt 2 geöffnet oder geschlossen, wird der Energieumformer 21 mit dem Torblatt 2 beschleunigt. Durch die der Beschleunigung entgegengesetzte auf die Masse 222 wirkende Trägheitskraft wird der Biegeschwinger 221 ausgelenkt und wiederum in eine gedämpfte oszillierende Schwingung versetzt. Dadurch erzeugt der Biegeschwinger 221 eine Wechselspannung, welche der Energieumformer 21 an seinem Ausgang zur Verfügung stellt.

Der erfindungsgemäße Biegeschwinger 221 ist senkrecht zu der Bewegungsrichtung des Torblatts 2 derart angeordnet, dass er bei einer Beschleunigung des Torblatts 2 seine maximale Auslenkung erreicht. Der Biegeschwinger 221 ist derart angeordnet, dass er im Wesentlichen nur einen translatorischen Freiheitsgrad ($f = 1$) aufweist. Da der Biegeschwinger 221 einseitig eingespannt ist und an seinem freien Ende die Masse 222 angebracht ist, kann diese Masse 222 die Auslenkung des Biegeschwingers 221 noch verstärken. Die Gewichtskraft und der Angriffspunkt der Masse 222 auf dem Biegeschwinger 221 sowie die Auslegung des Biegeschwingers 221 selbst, etwa Länge, Dicke und Elastizitätsmodul, sind derart ausgebildet, dass die erzeugte elektrische Spannung maximal ist. Auch hier kann, wie in Fig. 6 dargestellt, vorzugsweise der Freiheitsgrad mit der zumindest einen Absturzrichtung des Torblatts 2 zusammenfallen. Weiter kann mittels eines Komparators eine Erfassung des Absturzes in ähnlicher Weise realisiert werden, wie das in Zusammenhang mit Fig. 6 erläutert ist.

Die Erfindung lässt neben den erläuterten Ausführungsformen und Aspekten weitere Gestaltungsgrundsätze zu. So können einzelne Merkmale der verschiedenen Ausführungsformen und Aspekte auch beliebig miteinander kombiniert werden, solange dies für den Fachmann ausführbar ist.

Weiter können alternativ auch andere Mechaniken für den elektromechanischen Energieumformer zum Einsatz kommen. Beispielsweise kann auch ein Dynamo mit einer Achse und mit einer an der Achse exzentrisch befestigten Masse zum Einsatz kommen.

Das erfindungsgemäße Tor, welches vorstehend als Rolltor erläutert wurde, kann beispielsweise auch ein Falttor oder ein Klapptor sein. So sind erfindungsgemäß alle Tore umfasst, bei denen Torblätter eine definierte Bewegung beziehungsweise einen vorbestimmten Laufweg erfahren.

Weiter kann die Torblattabsturzdetektionsvorrichtung an einer beliebigen Stelle des Torblatts untergebracht sein, beispielsweise in der Mitte.

Grundsätzlich kann die Torblattabsturzdetektionsvorrichtung auch weitere Baugruppen, beispielsweise energieverbrauchsarme Anzeigeelemente, aufweisen.

Weiter kann die Torblattabsturzdetektionsvorrichtung zusätzlich einen Thermogenerator als weiteren Energieumformer aufweisen. Ein solcher Thermo- /Spannungsumformer ist ein thermoelektrischer Generator, der eine Temperaturdifferenz in elektrische Energie wandeln kann. Grundlage des thermoelektrischen Generators ist der Seebeck-Effekt, beziehungsweise der umgekehrte Peltier-Effekt, bei dem eine Temperaturdifferenz zu einer Spannung an zwei Elektroden führt, die auf gegenüberliegenden Seiten eines plattenförmigen Elements angeordnet sind. Dabei werden beispielsweise Peltier-ähnliche-Elemente zwischen der ersten und der zweiten Seite des Torblatts in einer Lamelle montiert. Als Material können hier Halbleitermaterialien wie beispielsweise Bi2Te3, PbTe, SiGe, BiSb oder FeSi2 verwendet werden.

Das in Fig. 1 dargestellte Torblatt kann sich von unten nach oben und umgekehrt bewegen. Von der Erfindung umfasst sind aber auch Tore, deren Torblätter sich in andere Richtungen, beispielsweise seitwärts, bewegen können.


**Patentansprüche**

1. Torblattabsturzdetektionsvorrichtung (100) zum Erfassen eines Absturzes eines Torblatts (2) eines Tores (1), vorzugsweise eines schnelllaufenden Industrietores, **dadurch gekennzeichnet, dass** die Torblattabsturzdetektionsvorrichtung (100) am oder im Torblatt (2) vorgesehen ist, aufweisend:

   ein Mittel zum Erfassen einer Beschleunigung der Torblattabsturzdetektionsvorrichtung (100) in zumindest einer Absturzrichtung der Torblattabsturzdetektionsvorrichtung (100);
   eine drahtlose Kommunikationseinheit (200) zum Senden eines Absturzmeldesignals, falls der Absturz des Torblatts (2) positiv erfasst wird, wobei
   die positive Erfassung des Absturzes des Torblatts (2) basierend auf der erfassten Beschleunigung erfolgt.

2. Torblattabsturzdetektionsvorrichtung (100) nach Anspruch 1, weiter aufweisend:
   einen elektromechanischen Energieumformer (21) mit einer relativ zur Torblattabsturzdetektionsvorrichtung (100) beweglichen Masse, wobei die Energieversorgung der Torblattabsturzdetektionsvorrichtung (100), vorzugsweise ausschließlich, mit elektrischer Energie von dem Energieumformer (21) erfolgt.

3. Torblattabsturzdetektionsvorrichtung (100) nach Anspruch 1 oder 2, wobei das Mittel zum Erfassen der Beschleunigung der Torblattabsturzdetektionsvorrichtung (100) ein piezoelektrischer Beschleunigungssensor oder ein MEMS-Beschleunigungssensor ist, welcher die Beschleunigung der Torblattabsturzdetektionsvorrichtung (100) in Absturzrichtung misst.

4. Torblattabsturzdetektionsvorrichtung (100) nach einem der Ansprüche 2 bis 3, wobei
   das Mittel zum Erfassen der Beschleunigung der Torblattabsturzdetektionsvorrichtung (100) ein Analog/Digital-Wandler ist, welcher die Spannung des Ausgangs des Energieumformers erfasst, wobei die Spannung des Ausgangs des Energieumformers eine Funktion der Beschleunigung der Torblattabsturzdetektionsvorrichtung (100) in Absturzrichtung darstellt.

5. Torblattabsturzdetektionsvorrichtung (100) nach einem der Ansprüche 1 bis 4, wobei
   die Torblattabsturzdetektionsvorrichtung (100) derart eingerichtet ist, dass der Absturz des Torblatts (2) positiv beurteilt wird, falls die erfasste Beschleunigung von einem vorbestimmten Beschleunigungsbereich abweicht oder die aus der Beschleunigung errechnete Geschwindigkeit einen vorbestimmten Geschwindigkeitsgrenzwert überschreitet.

6. Torblattabsturzdetektionsvorrichtung (100) nach einem der Ansprüche 1 bis 5, wobei
   die Torblattabsturzdetektionsvorrichtung (100) derart eingerichtet ist, dass der Absturz des Torblatts (2) positiv beurteilt wird, falls die erfasste Beschleunigung für eine vorbestimmte erste Zeitdauer in einem unzulässigen Beschleunigungsbereich liegt, wobei
   die vorbestimmte erste Zeitdauer derart eingerichtet ist, dass diese länger ist, als die Zeitdauer, in der die erfasste Beschleunigung bei einem üblichen Betrieb des Torblatts (2) liegt.

7. Torblattabsturzdetektionsvorrichtung (100) nach einem der Ansprüche 1 bis 6, wobei

   die Torblattabsturzdetektionsvorrichtung (100) derart eingerichtet ist, dass der Absturz des Torblatts (2) positiv beurteilt wird, falls die erfasste Beschleunigung für eine vorbestimmte zweite Zeitdauer in einem unzulässigen Beschleunigungsbereich liegt, und
   die vorbestimmte zweite Zeitdauer derart eingerichtet ist, dass diese kürzer ist, als die Zeitdauer, in der die erfasste Beschleunigung bei einem üblichen Betrieb des Torblatts (2) liegt.

8. Torblattabsturzdetektionsvorrichtung (100) nach einem der Ansprüche 1 bis 7, wobei
   die Torblattabsturzdetektionsvorrichtung (100) derart eingerichtet ist, dass der Absturz des Torblatts (2) positiv beurteilt wird, falls die erfasste Ist-Änderung der Beschleunigung um mehr als eine vorbestimmte Toleranz von einer Soll-Änderung der Beschleunigung des Torblatts (2) abweicht.

9. Torblattabsturzdetektionsvorrichtung (100) nach Anspruch 1, wobei das Mittel zum Erfassen der Beschleunigung der Torblattabsturzdetektionsvorrichtung (100) zumindest ein Komparator mit einem voreingestellten Spannungsschwellwert ist, der zumindest einem voreingestellten Beschleunigungsgrenzwert entspricht, wobei der zumindest eine Komparator mit seinem Eingang mit dem Ausgang des Energieumformers verbunden ist; und bei Überschreiten des Spannungsschwellwerts der Absturz des Torblatts (2) positiv beurteilt wird.

10. Torblattabsturzdetektionsvorrichtung (100) nach einem der Ansprüche 2 bis 9, wobei der Energieumformer (21) derart eingerichtet ist, dass dieser auf dem Induktionsprinzip oder dem piezoelektrischen Prinzip basiert.

11. Torblattabsturzdetektionsvorrichtung (100) nach einem der Ansprüche 2 bis 10, wobei

der Energieumformer (21) ein Lineargenerator ist, und
ein Freiheitsgrad der Masse des Energieumformers (21) f = 1 ist, und
der Freiheitsgrad der Masse zumindest einer der Absturzrichtungen entspricht.

12. Torblattabsturzdetektionsvorrichtung (100) nach einem der Ansprüche 1 bis 11, aufweisend:

eine Energiespeichereinheit (23) zum Speichern der vom Energieumformer (21) erzeugten elektrischen Energie; und/oder
eine Energiemanagementeinheit (22) zum Verwalten einer vom Energieumformer (21) erzeugten Energie; und/oder
einen Gleichrichter zum Gleichrichten der vom Energieumformer erzeugten Ausgangsspannung; und/oder
eine Recheneinheit (24) zum Berechnen der Beschleunigungswerte,
wobei die Recheneinheit (24) optional eine Signalverarbeitungseinheit aufweist.

13. System zur Absturzsicherung eines Tores (1), aufweisend:

ein Tor (1), insbesondere schnelllaufendes Industrietor mit einem Torblatt (2), welches in seitlichen Führungen (3) geführt ist und welches eine Toröffnung abdeckt,
und mit einer Antriebseinrichtung (4) zum Bewegen des Torblatts (2) zwischen einer Öffnungs- und Schließstellung; und mit einer Torsteuereinrichtung (5) zum Ansteuern der Antriebseinrichtung (4), wobei die Torsteuereinrichtung (5) eine weitere Kommunikationseinheit aufweist; und
eine Torblattabsturzdetektionsvorrichtung (100) nach einem der Ansprüche 1 bis 12, wobei die drahtlose Kommunikationseinheit (200) der Torblattabsturzdetektionsvorrichtung (100) ein Absturzmeldesignal an die eine weitere Kommunikationseinheit der Torsteuereinrichtung (5) sendet, falls ein Absturz des Torblatts (2) positiv erfasst wird.

14. System zur Absturzsicherung nach Anspruch 13, wobei falls das Absturzmeldesignal empfangen wurde, ein Not-Stopp-Mechanismus das Abstürzen des Torblatts (2) innerhalb einer vordefinierten Zeitspanne stoppt, indem eine Motorbremse und/oder mechanische Verriegelungsbolzen von der Torblattabsturzdetektionsvorrichtung (100) ausgelöst wird/werden, wobei der Energieumformer (21) derart eingerichtet ist, dass dieser auf dem Induktionsprinzip oder dem piezoelektrischen Prinzip basiert.

15. System zur Absturzsicherung nach Anspruch 13, wobei falls das Absturzmeldesignal empfangen wurde, ein Not-Stopp-Mechanismus das Abstürzen des Torblatts (2) innerhalb einer vordefinierten Zeitspanne stoppt, indem eine Motorbremse und/oder mechanische Verriegelungsbolzen von der Torsteuereinrichtung (5) ausgelöst wird/werden.

16. Verwendung einer in einem Torblatt (2) eines Tores (1) angebrachten energieautarken Torblattabsturzdetektionsvorrichtung (100) nach einem der Ansprüche 1 bis 12 und mit einem elektromechanischen Energieumformer (21) des Anspruchs 2.

17. Verfahren zur Detektion des Absturzes eines Torblattes (2) eines eine Torblattabsturzdetektionsvorrichtung (100) nach einem der Ansprüche 1-12 aufweisenden Tores (1), mit den folgenden Schritten:

Umwandeln der Beschleunigungsarbeit des Torblatts (2) in elektrische Energie mittels eines elektromechanischen Energieumformers (21) des Anspruchs 2;

Erfassen der Beschleunigung des Torblattes (2);

Beurteilen, ob das Torblatt (2) abstürzt oder nicht, basierend auf der erfassten Beschleunigung, und Auslösen einer Absturz-Verriegelungsvorrichtung, und

Senden eines Absturzmeldesignals mittels einer drahtlosen Kommunikationseinrichtung (200), falls der Beurteilungsschritt den Absturz des Torblatts (2) positiv beurteilt;

wobei die Schritte des Erfassens, des Beurteilens und des Sendens unter ausschließlicher Verwendung der aus der Bewegung des Torblattes (2) erzeugten Energie erfolgen.

## Claims

1. Door leaf fall detection device (100) for detecting a fall of a door leaf (2) of a door (1), preferably a high-speed industrial door, **characterized in that** the door leaf fall detection device (100) is provided on or in the door leaf (2), comprising:

   a means for detecting an acceleration of the door leaf fall detection device (100) in at least one falling direction of the door leaf fall detection device (100);

   a wireless communication unit (200) for transmitting a fall notification signal, if the fall of the door leaf (2) is positively detected, wherein

   the positive detection of the fall of the door leaf (2) is based on the detected acceleration.

2. Door leaf fall detection device (100) according to claim 1, further comprising:

   an electromechanical energy converter (21) having a mass movable relative to said door leaf fall detection device (100), wherein

   the power supply of the door leaf fall detection device (100) is, preferably exclusively, provided with electrical power from the energy converter (21).

3. Door leaf fall detection device (100) according to claim 1 or 2, wherein
   the means for detecting the acceleration of the door leaf fall detection device (100) is a piezoelectric acceleration sensor or a MEMS acceleration sensor which measures the acceleration of the door leaf fall detection device (100) in the falling direction.

4. Door leaf fall detection device (100) according to anyone of claims 1 to 3, wherein
   the means for detecting the acceleration of the door leaf fall detection device (100) is an analog-to-digital converter which detects the voltage of the output of the energy converter, wherein the voltage of the output of the energy converter is a function of the acceleration of the door leaf fall detection device (100) in the falling direction.

5. Door leaf fall detection device (100) according to anyone of claims 1 to 4, wherein
   the fall of the door leaf (2) is positively evaluated, if the detected acceleration deviates from a predetermined acceleration range or the speed calculated from the acceleration exceeds a predetermined speed threshold value.

6. Door leaf fall detection device (100) according to anyone of claims 1 to 5, wherein

   the fall of the door leaf (2) is assessed positively, if the detected acceleration lies within an impermissible acceleration range for a predetermined first period of time, wherein

   the predetermined first period of time is arranged to be longer than the period of time in which the detected acceleration is during normal operation of the door leaf (2).

7. Door leaf fall detection device (100) according to anyone of claims 1 to 6, wherein

   the fall of the door leaf (2) is positively evaluated, if the detected acceleration for a predetermined second period of time is within an impermissible acceleration range, and

   the predetermined second period of time is arranged to be shorter than the period of time in which the detected acceleration occurs during normal operation of the door leaf (2).

8. Door leaf fall detection device (100) according to anyone of claims 1 to 7, wherein
the fall of the door leaf (2) is evaluated positively, if the detected actual change of acceleration deviates by more than a predetermined tolerance from a desired change of acceleration of the door leaf (2).

9. Door leaf fall detection device (100) according to claim 1, wherein

the means for detecting the acceleration of the door leaf fall detection device (100) is at least one comparator having a preset voltage threshold value corresponding to at least one preset acceleration threshold value, the at least one comparator being connected with its input to the output of the energy converter; and
if the voltage threshold value is exceeded, the fall of the door leaf (2) is assessed positively.

10. Door leaf fall detection device (100) according to anyone of claims 1 to 9, wherein
the energy converter (21) is arranged such that it is based on the induction principle or the piezoelectric principle.

11. Door leaf fall detection device (100) according to anyone of claims 1 to 10, wherein

the energy converter (21) is a linear generator, and
a degree of freedom of the mass of the energy converter (21) is f = 1, and
the degree of freedom of the mass corresponds to at least one of the falling directions.

12. Door leaf fall detection device (100) according to any one of claims 1 to 11, comprising:

an energy storage unit (23) for storing the electrical energy generated by the energy converter (21); and/or
an energy management unit (22) for managing an energy generated by the energy converter (21); and/or
a rectifier for rectifying the output voltage generated by the energy converter; and/or
an computing unit (24) for calculating the acceleration values,
wherein the computing unit (24) optionally comprises a signal processing unit.

13. System for fall protection of a door (1), comprising:

a door (1), in particular a high-speed industrial door, having a door leaf (2) which is guided in lateral guides (3) and which covers a door opening, and having a driving means (4) for moving the door leaf (2) between an open and closed position; and having a door control means (5) for controlling the driving means (4), the door control means (5) having a further communication unit; and
a door leaf fall detection device (100) according to one of claims 1 to 12, wherein said wireless communication unit (200) of said door leaf fall detection device (100) sends a fall notification signal to said one further communication unit of said door control means (5), if a fall of said door leaf (2) is positively detected.

14. Fall protection system according to claim 13, wherein
if the fall indication signal has been received, an emergency stop mechanism stops the fall of the door leaf (2) within a predefined period of time by triggering a motor brake and/or mechanical locking bolts by the door leaf fall detection device (100), wherein the energy converter (21) is configured such that it is based on the induction principle or the piezoelectric principle.

15. Fall protection system according to claim 13, wherein
if the fall indication signal has been received, an emergency stop mechanism stops the fall of the door leaf (2) within a predefined period of time by releasing a motor brake and/or mechanical locking bolts from the door control means (5).

16. Use of an energy-autonomous door leaf fall detection device (100) according to anyone of claims 1 to 12, wherein door leaf fall detection device (100) is mounted in a door leaf (2) of a door (1), the door leaf fall detection device (100) having an electromechanical energy converter (21) according to claim 2.

17. Method for detecting the fall of a door leaf (2) of a door (1) having a door leaf fall detection device (100) according to anyone of claim 1 to 12, the method comprising the following steps:

Conversion of the acceleration work of the door leaf (2) into electrical energy by means of an electromechanical energy converter (21) according to claim 2;

Detecting the acceleration of the door leaf (2);

Evaluate whether the door leaf (2) falls or not, based on the detected acceleration, and

Triggering a fall interlock device, and

Transmitting a fall notification signal by wireless communication means (200) if the evaluation step positively evaluates the fall of the door leaf (2);

wherein the steps of detecting, evaluating and transmitting are performed using exclusively the energy generated from the movement of the door leaf (2).

**Revendications**

1.  Dispositif de détection de chute de volet de porte (100), permettant de détecter la chute d'un volet de porte (2) d'une porte (1), de préférence d'une porte industrielle à déplacement rapide, **caractérisé en ce que**
    le dispositif de détection de chute de volet de porte (100) est fourni sur ou dans le volet de porte (2) et présente :

    un moyen permettant de détecter une accélération du dispositif de détection de chute de volet de porte (100) dans au moins une direction de chute du dispositif de détection de chute de volet de porte (100) ;
    une unité de communication sans fil (200) permettant d'envoyer un signal de notification de chute si la chute du volet de porte (2) est détectée de manière positive, dans lequel
    la détection positive de la chute du volet de porte (2) intervient en se basant sur l'accélération détectée.

2.  Dispositif de détection de chute de volet de porte (100) selon la revendication 1, présentant en outre :

    un convertisseur d'énergie électromécanique (21) avec une masse mobile par rapport au dispositif de détection de chute de volet de porte (100), dans lequel
    l'alimentation en énergie du dispositif de détection de chute de volet de porte (100) se fait, de préférence exclusivement, avec de l'énergie électrique provenant du convertisseur d'énergie (21).

3.  Dispositif de détection de chute de volet de porte (100) selon la revendication 1 ou 2, dans lequel
    le moyen permettant de détecter l'accélération du dispositif de détection de chute de volet de porte (100) est un capteur d'accélération piézo-électrique ou un capteur d'accélération MEMS qui mesure l'accélération du dispositif de détection de chute de volet de porte (100) dans la direction de chute.

4.  Dispositif de détection de chute de volet de porte (100) selon l'une quelconque des revendications 2 à 3, dans lequel
    le moyen permettant de détecter l'accélération du dispositif de détection de chute de volet de porte (100) est un convertisseur analogique-numérique qui détecte la tension de sortie du convertisseur d'énergie, dans lequel la tension de sortie du convertisseur d'énergie est fonction de l'accélération du dispositif de détection de chute de volet de porte (100) dans la direction de chute.

5.  Dispositif de détection de chute de volet de porte (100) selon l'une quelconque des revendications 1 à 4, dans lequel
    le dispositif de détection de chute de volet de porte (100) est conçu de telle manière que la chute du volet de porte (2) est évaluée de manière positive si l'accélération détectée s'écarte d'une plage d'accélération prédéterminée ou si la vitesse calculée à partir de l'accélération dépasse une valeur limite de vitesse prédéterminée.

6.  Dispositif de détection de chute de volet de porte (100) selon l'une quelconque des revendications 1 à 5, dans lequel

    le dispositif de détection de chute de volet de porte (100) est conçu de telle manière que la chute du volet de porte (2) est évaluée de manière positive si l'accélération détectée se situe dans une plage d'accélération inadmissible pendant une première durée prédéterminée, dans lequel
    la première durée prédéterminée est conçue de manière à être plus longue que la durée pendant laquelle l'accélération détectée correspond à un fonctionnement normal du volet de porte (2).

7.  Dispositif de détection de chute de volet de porte (100) selon l'une quelconque des revendications 1 à 6, dans lequel

    le dispositif de détection de chute de volet de porte (100) est conçu de telle manière que la chute du volet de porte (2) est évaluée de manière positive si l'accélération détectée se situe dans une plage d'accélération inadmissible pendant une seconde durée prédéterminée, et
    la seconde durée prédéterminée est conçue de manière à être plus courte que la durée pendant laquelle l'accélération détectée correspond à un fonctionnement normal du volet de porte (2).

8. Dispositif de détection de chute de volet de porte (100) selon l'une quelconque des revendications 1 à 7, dans lequel le dispositif de détection de chute de volet de porte (100) est conçu de telle manière que la chute du volet de porte (2) est évaluée de manière positive si la modification réelle détectée de l'accélération s'écarte de plus d'une tolérance prédéterminée par rapport à une modification souhaitée de l'accélération du volet de porte (2).

9. Dispositif de détection de chute de volet de porte (100) selon la revendication 1, dans lequel

le moyen permettant de détecter l'accélération du dispositif de détection de chute de volet de porte (100) est au moins un comparateur avec une valeur seuil de tension prédéfinie correspondant à au moins une valeur limite d'accélération prédéfinie, dans lequel l'entrée du au moins un comparateur est reliée à la sortie du convertisseur d'énergie ; et
lorsque la valeur seuil de tension est dépassée, la chute du volet de porte (2) est évaluée de manière positive.

10. Dispositif de détection de chute de volet de porte (100) selon l'une quelconque des revendications 2 à 9, dans lequel le convertisseur d'énergie (21) est conçu de manière à reposer sur le principe d'induction ou sur le principe piézo-électrique.

11. Dispositif de détection de chute de volet de porte (100) selon l'une quelconque des revendications 2 à 10, dans lequel

le convertisseur d'énergie (21) est un générateur linéaire, et
le degré de liberté de la masse du convertisseur d'énergie (21) est f = 1, et
le degré de liberté de la masse correspond à au moins une des directions de chute.

12. Dispositif de détection de chute de volet de porte (100) selon l'une quelconque des revendications 1 à 11, comprenant :

une unité de stockage d'énergie (23) permettant de stocker l'énergie électrique générée par le convertisseur d'énergie (21) ; et/ou
une unité de gestion d'énergie (22) permettant de gérer l'énergie générée par le convertisseur d'énergie (21) ; et/ou
un redresseur permettant de redresser la tension de sortie générée par le convertisseur d'énergie ; et/ou
une unité de calcul (24) permettant de calculer les valeurs d'accélération,
dans lequel l'unité de calcul (24) présente éventuellement une unité de traitement de signal.

13. Système de protection contre la chute d'une porte (1), présentant :

une porte (1), en particulier une porte industrielle à déplacement rapide avec un volet de porte (2) guidé dans des guides latéraux (3) et recouvrant une ouverture de porte, et avec un dispositif d'entraînement (4) permettant de déplacer le volet de porte (2) entre une position ouverte et une position fermée ; et avec un dispositif de commande de porte (5) permettant de commander le dispositif d'entraînement (4), dans lequel le dispositif de commande de porte (5) présente une autre unité de communication ; et
un dispositif de détection de chute de volet de porte (100) selon l'une quelconque des revendications 1 à 12, dans lequel l'unité de communication sans fil (200) du dispositif de détection de chute de volet de porte (100) envoie un signal de notification de chute à l'autre unité de communication du dispositif de commande de porte (5) si la chute du volet de porte (2) est détectée de manière positive.

14. Système de protection contre les chutes selon la revendication 13, dans lequel si le signal de notification de chute a été reçu, un mécanisme d'arrêt d'urgence arrête la chute du volet de porte (2) dans un laps de temps prédéfini grâce au déclenchement, par le dispositif de détection de chute de battant de porte (100), d'un frein moteur et/ou de boulons de verrouillage mécaniques, dans lequel le convertisseur d'énergie (21) est conçu de manière à reposer sur le principe d'induction ou le principe piézoélectrique.

15. Système de protection contre les chutes selon la revendication 13, dans lequel si le signal de notification de chute a été reçu, un mécanisme d'arrêt d'urgence arrête la chute du volet de porte (2) dans un laps de temps prédéfini grâce au déclenchement, par le dispositif de commande de porte (5), d'un frein moteur et/ou de boulons de verrouillage mécaniques.

**16.** Utilisation d'un dispositif de détection de chute de volet de porte (100) selon l'une quelconque des revendications 1 à 12, autonome en énergie et monté dans un volet de porte (2) d'une porte (1) et comprenant un convertisseur d'énergie électromécanique (21) selon la revendication 2.

**17.** Procédé permettant de détecter la chute d'un volet de porte (2) d'une porte (1) présentant un dispositif de détection de chute de volet de porte (100) selon l'une quelconque des revendications 1 à 12, comprenant les étapes ci-dessous consistant à :

convertir le travail d'accélération du volet de porte (2) en énergie électrique au moyen d'un convertisseur d'énergie électromécanique (21) selon la revendication 2 ;
détecter l'accélération du volet de porte (2) ;
évaluer si le volet de porte (2) chute ou non en se basant sur l'accélération détectée, et
déclencher un dispositif de verrouillage antichute, et
envoyer un signal de notification de chute au moyen d'un dispositif de communication sans fil (200) si l'étape d'évaluation évalue la chute du volet de porte (2) de manière positive ;
dans lequel les étapes de détection, d'évaluation et d'envoi sont mises en œuvre en utilisant exclusivement l'énergie générée par le déplacement du volet de porte (2).

**Fig. 1**

ELEKTRISCH
AUTARK

EXTERNE
STROMVERSORGUNG

VORRICHTUNG

b)

a)

TORSTEUER-
EINRICHTUNG

ANTRIEBS-
EINRICHTUNG

100

5

4

NOT-STOPP-
EINRICHTUNG

Fig. 2

# Fig. 3

Fig. 4

## Fig. 5

211a
214a
f = 1
212
21
213
OBEN
ABSTURZ-
RICHTUNG
211b
214b
UNTEN

## Fig. 6

OBEN
221a
21
222
223
f = 1
ABSTURZ-
RICHTUNG
UNTEN
221b
221

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202010009055 U1
- DE 102010062673 A1
- DE 102015000582 A1
- WO 2007045422 A1
- EP 2887535 A1